(19) Europäisches Patentamt
European Patent Office
Office européen des brevets

(11) **EP 3 349 277 A1**

(12) **EUROPEAN PATENT APPLICATION**
published in accordance with Art. 153(4) EPC

(43) Date of publication:
**18.07.2018 Bulletin 2018/29**

(21) Application number: **15903618.5**

(22) Date of filing: **11.09.2015**

(51) Int Cl.:
*H01M 4/48* (2010.01)  *H01M 4/36* (2006.01)

(86) International application number:
**PCT/JP2015/075831**

(87) International publication number:
**WO 2017/042956 (16.03.2017 Gazette 2017/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Kabushiki Kaisha Toshiba
Minato-ku
Tokyo 105-8001 (JP)**

(72) Inventors:
• **YASUDA Kazuhiro
Tokyo 105-8001 (JP)**

• **ISOZAKI Yoshiyuki
Tokyo 105-8001 (JP)**
• **HOSHINA Keigo
Tokyo 105-8001 (JP)**
• **YAMASHITA Yasunobu
Tokyo 105-8001 (JP)**
• **TAKAMI Norio
Tokyo 105-8001 (JP)**

(74) Representative: **Hoffmann Eitle
Patent- und Rechtsanwälte PartmbB
Arabellastraße 30
81925 München (DE)**

(54) **NEGATIVE ELECTRODE ACTIVE MATERIAL AND MANUFACTURING METHOD THEREFOR, NONAQUEOUS ELECTROLYTE BATTERY, AND BATTERY PACK**

(57) A negative electrode active material according to an embodiment includes at least a titanic oxide compound. The intensity ratio of an infrared absorption spectrum after pyridine adsorption and desorption on a surface of the negative electrode active material satisfies relationships represented by the following formula $[\{I(3663\ cm^{-1})/I(3738\ cm^{-1})\} > 0.7]$ and the following formula $[\{I(2981\ cm^{-1})/I(2930\ cm^{-1})\} < 1]$, provided that, in the above formulae, $\{I(3663\ cm^{-1})\}$, $\{I(3738\ cm^{-1})\}$, $\{(2981\ cm^{-1})\}$, and $\{I(2930\ cm^{-1})\}$ indicate integrated intensities in regions of infrared wavenumbers.

EP 3 349 277 A1

**Description**

[Field]

Embodiments of the present invention relate to a negative electrode active material and a method of producing the same, a nonaqueous electrolyte battery, and a battery pack.

[Background]

A nonaqueous electrolyte battery in which a titanic oxide compound is used as a negative electrode active material has a lower likelihood of lithium dendrite growth than a nonaqueous electrolyte battery using a carbona a ceramic, thermal runaway is unlikely to occur. Therefore, a nonaqueous electrolyte battery in ceous material because the-titanic oxide compound has a higher Li insertionon and extraction potential than the carbonaceous material. In addition, since the titanic oxide compound is which a titanic oxide compound is used for a negative electrode is considered to be highly safe.

Meanwhile, a titanic oxide compound is highly reactive with respect to a nonaqueous electrolyte compared to a graphite negative electrode that is generally used. When a titanic oxide compound reacts with a nonaqueous electrolyte, for example, a decomposition product of the nonaqueous electrolyte is generated so that an impedance may increase, and a gas may be generated so that a battery expands. Therefore, a cycle life of a nonaqueous electrolyte battery in which a titanic oxide compound is used as a negative electrode active material is likely to be lower. In particular, when a titanic oxide compound having a monoclinic titanium dioxide crystal structure is used, there is a possibility of a cycle life significantly decreasing.

[Citation List]

[Patent Literature]

[Patent Document 1]
Japanese Unexamined Patent Application, First Publication No. 2008-117625
[Patent Document 2]
Japanese Unexamined Patent Application, First Publication No. 2008-91327

[Non Patent Document]

[Non Patent Document 1]
T. Ohzuku, T. Kodama, T. Hirai, J. Power Sources 1985, 14, 153.
[Non Patent Document 2]
R. Marchand, L. Brohan, M. Tournoux, Material Research Bulletin 15, 1129 (1980).

[Summary of Invention]

[Technical Problem]

An object of the present invention is to provide a negative electrode active material through which it is possible to increase a cycle life and a method of producing the same, a nonaqueous electrolyte battery containing such a negative electrode active material, and a battery pack including such a nonaqueous electrolyte battery.

[Solution to Problem]

A negative electrode active material according to an embodiment includes at least a titanic oxide compound. The intensity ratio of an infrared integrated spectrum after pyridine adsorption and desorption on a surface of the negative electrode active material satisfies relationships represented by the following formula [$\{I(3663\ cm^{-1})/I(3738\ cm^{-1})\}>0.7$] and the following formula [$\{I(2981\ cm^{-1})/I(2930\ cm^{-1})\}<1$], provided that, in the above formulae, $\{I(3663\ cm^{-1})\}$, $\{I(3738\ cm^{-1})\}$, $\{I(2981\ cm^{-1})\}$, and $\{I(2930\ cm^{-1})\}$ indicate integrated intensities in regions of infrared wavenumbers.

[Brief Description of The Drawings]

Fig. 1 is a cross-sectional view showing a nonaqueous electrolyte battery according to a third embodiment.
Fig. 2 is an enlarged cross-sectional view of a part A shown in Fig. 1.
Fig. 3 is an exploded perspective view showing a battery pack according to a fourth embodiment.
Fig. 4 is a block diagram showing an electric circuit included in the battery pack shown in Fig. 3.
Fig. 5 is a graph explaining an intensity ratio of an infrared absorption spectrum.
Fig. 6 is a graph explaining an intensity ratio of an infrared absorption spectrum.

[Detailed Description]

A negative electrode active material and a method of producing the same, a nonaqueous electrolyte battery, and a battery pack according to embodiments will be described below with reference to the accompanying drawings.

(First embodiment)

A negative electrode active material according to a first embodiment will be described below in detail.

The negative electrode active material according to the first embodiment includes at least a titanic oxide compound. The intensity ratio of an infrared absorption spectrum after pyridine adsorption and desorption on a surface of the negative electrode active material satisfies relationships represented by the following Formula (1) and Formula (2).

$$\{I(3663 \ cm^{-1})/I(3738 \ cm^{-1})\} > 0.7 \ ...(1)$$

$$\{I(2981 \ cm^{-1})/I(2930 \ cm^{-1})\} < 1 \ ...(2)$$

Here, in Formulae (1) and (2), $\{I(3663 \ cm^{-1})\}$, $\{I(3738 \ cm^{-1})\}$, $\{I(2981 \ cm^{-1})\}$, and $\{I(2930 \ cm^{-1})\}$ indicate integrated intensities in regions of infrared wavenumbers.

Since the titanic oxide compound included in the negative electrode active material of the present embodiment has a solid oxide site, a hydroxyl group, or the like on its surface, it is highly reactive with respect to a nonaqueous electrolyte. Therefore, in general, in a nonaqueous electrolyte battery in which a titanic oxide compound is used as a negative electrode active material, excess inorganic coating or organic coating is formed on a negative electrode as charging and discharging are performed, the resistance increases, and output characteristics deteriorate. As a result, the electrode performance decreases, the internal resistance of the battery increases, and the nonaqueous electrolyte deteriorates, which may cause a decrease in the cycle life of the battery.

In particular, since a titanic oxide compound having a monoclinic titanium dioxide crystal structure is a solid acid, it is highly reactive with respect to a nonaqueous electrolyte. In addition, since the titanic oxide compound having a monoclinic titanium dioxide crystal structure has a high theoretical capacity, when it is used as the negative electrode active material, it can be expected to increase a battery capacity. However, when the titanic oxide compound having a monoclinic titanium dioxide crystal structure is used as the negative electrode active material, there is a problem of a significant decrease in cycle life due to the above-described problems.

The monoclinic titanium dioxide crystal structure mainly belongs to the space group C2/m and exhibits a tunnel structure. In the present embodiment, such a crystal structure may be referred to as a $TiO_2(B)$ crystal structure. In addition, the titanic oxide compound having a monoclinic titanium dioxide crystal structure may be referred to as a titanic oxide compound having a $TiO_2(B)$ crystal structure. A detailed crystal structure of $TiO_2(B)$ is described in, for example, Non Patent Document 2. The titanic oxide compound having a $TiO_2(B)$ crystal structure can be represented by, for example, the general formula $Li_xTiO_2(0 \leq x \leq 1)$. Here, in the above general formula, x varies in a range of 0 to 1 due to a charging and discharging reaction.

In a battery in which a carbonaceous material or a spinel structure lithium titanate is used as the negative electrode active material, when vinylene carbonate is added to a nonaqueous electrolyte, it is possible to prevent a reaction between a negative electrode and the nonaqueous electrolyte. In such a battery, vinylene carbonate is reduced and decomposes on the negative electrode and forms a stable coating on the negative electrode, thereby preventing excess coating formation. However, in a battery in which a titanic oxide compound having a solid oxide site, a hydroxyl group, or the like on its surface such as a titanic oxide compound having a $TiO_2(B)$ crystal structure is used as the negative electrode active material, even if vinylene carbonate is added to the nonaqueous electrolyte, a reaction between the negative electrode and the nonaqueous electrolyte is not prevented, and a coating is continuously formed on the negative electrode. Accordingly, the resistance increases and the cycle life may decrease.

On the other hand, the negative electrode active material according to the present embodiment has a configuration in which at least a titanic oxide compound is included as described above, and the intensity ratio of an infrared absorption spectrum after pyridine adsorption and desorption on a surface, which is measured by, for example, Fourier transform infrared spectroscopy (FT-IR) satisfies relationships represented by the following formula [{I(3663 cm$^{-1}$)/I(3738 cm$^{-1}$)}>0.7] and the following formula [{1(2981 cm$^{-1}$)/I(2930 cm$^{-1}$)}<1].

According to the present embodiment, when a configuration in which the intensity ratio of an infrared absorption spectrum is controlled to have an appropriate range is used, it is possible to prevent an increase in resistance in the nonaqueous electrolyte battery and it is possible to increase the cycle life, which will be described below in detail.

The negative electrode active material according to the present embodiment preferably includes the above-described titanic oxide compound having a TiO$_2$(B) crystal structure. Since the titanic oxide compound having a TiO$_2$(B) crystal structure is highly reactive with respect to a nonaqueous electrolyte, when the titanic oxide compound having such a structure is used, the above-described effects of the present embodiment are easily obtained.

The TiO$_2$(B) crystal structure of the titanic oxide compound can be analyzed through powder X-ray diffraction using Cu-K$\alpha$ as a radiation source. The analysis of powder X-ray diffraction can be performed according to the following procedures.

First, a target specimen (a titanic oxide compound) is pulverized until an average particle size is about 5 $\mu$m. The average particle size can be obtained using a laser diffraction method.

Next, the pulverized specimen is filled into a holder part with a depth of 0.2 mm formed on a glass specimen plate. In this case, care needs to be taken that the specimen is sufficiently filled into the holder part. In addition, care needs to be taken such that cracks, voids, or the like do not occur in the specimen due to insufficient filling of the specimen.

Next, using another glass plate from the outside, sufficient pressing is performed, and smoothing is performed. Care needs to be taken that unevenness is not caused with respect to a reference plane of the holder due to excess or deficiency of a filling amount.

Next, the glass plate into which the specimen is filled is placed in a powder X-ray diffractometer, and a diffraction pattern is acquired using Cu-K$\alpha$ rays. Here, in general, since the TiO$_2$(B) crystal structure has low crystallinity, a peak intensity of an X-ray diffraction pattern is weak in powder X-ray measurement, and an intensity of a certain peak may not be easily observed in some cases depending on samples. However, the diffraction spectrum of the titanic oxide compound obtained according to the powder X-ray diffraction method can be measured with little influence on the coating layer if a proportion of the Si content (in terms of SiO$_2$) in the negative electrode active material after coating is, for example, 0.5 to 20 mass%, with respect to the total mass of the titanic oxide compound.

Furthermore, the titanic oxide compound having the above TiO$_2$(B) crystal structure may include another heteroelement. Examples of the heteroelement include at least one element selected from the group consisting of Zr, Nb, Mo, Ta, Y, P, and B. When the titanic oxide compound includes the above heteroelement, an influence of a Lewis acid site on the surface can be prevented.

The above heteroelement is preferably included in a range of 0.01 to 8 mass% with respect to the total mass of the titanic oxide compound including the heteroelement. When the titanic oxide compound includes 0.01 mass% or more of the heteroelement, it is possible to prevent an influence of a Lewis acid site. In addition, in consideration of a solid solubility limit of the heteroelement, the amount of the heteroelement with respect to the total mass of the titanic oxide compound is preferably in a range of 8 mass% or less, and is more preferably in a range of 0.05 to 3 mass%. Here, in the titanic oxide compound including the heteroelement, the amount of the heteroelement can be measured by inductively coupled plasma (ICP) emission spectroscopy.

The titanic oxide compound included in the negative electrode active material of the present embodiment is preferably granular. In particular, the titanic oxide compound is preferably composed of primary particles having an average particle size of 0.1 to 10 $\mu$m.

In addition, the negative electrode active material of the present embodiment is preferably composed of aggregated particles (secondary particles) formed of the primary particles of the titanic oxide compound. The average particle size of the aggregated particles is preferably 1 to 20 $\mu$m.

When the average particle size of the primary particles of the titanic oxide compound is 10 $\mu$m or more, it is easy to handle in industrial production, and when the average particle size thereof is 5 $\mu$m or less, it is possible to smoothly diffuse lithium ions in the titanic oxide compound solid.

In addition, when the average particle size of the aggregated particles (secondary particles) formed of the primary particles of the titanic oxide compound is 1 $\mu$m or more, it is easy to handle in industrial production, and when the average particle size thereof is 10 $\mu$m or less, it is easy to provide a uniform mass and thickness and the surface smoothness is improved when a coating is formed to produce an electrode.

In addition, the specific surface area of the secondary particles of the above titanic oxide compound is preferably

10 m$^2$/g or more and 20 m$^2$/g or less. When the specific surface area is 10 m$^2$/g or more, it is possible to secure sufficient insertionon and desorption sites of lithium ions. When the specific surface area is 20 m$^2$/g or less, it is easy to handle in industrial production.

In the negative electrode active material according to the present embodiment, a coating layer including a Si-containing metal oxide and a residual organic component is formed on at least a part of a surface of a titanic oxide compound powder. In this manner, in order for a Si-containing inorganic component (metal oxide) to be applied to the surface of the titanic oxide compound powder, it is necessary to use a metal alkoxide and perform drying in a low humidity environment.

As the metal alkoxide, for example, a monomer such as methyl silicate or ethyl silicate, and a condensation polymer such as methyl polysilicate or ethyl polysilicate may be used. In order to form the Si-containing coating layer on the surface of the titanic oxide compound powder, it is necessary to dilute and mix the metal alkoxide, the titanic oxide compound powder, and the metal alkoxide in a solvent such as ethanol, and then perform drying. The negative electrode active material according to the present embodiment can be obtained by forming the coating layer according to a sol gel reaction (hydrolysis and polymerization reactions) described above.

Here, metals other than Si included in the above metal alkoxide are not particularly limited. However, in consideration of costs of raw materials, an increase in weight during coating, and the like, it is preferable that a metal included in the metal alkoxide be only Si.

Here, since the coating layer including a Si-containing inorganic component (metal oxide) on the surface of the titanic oxide compound does not contribute to a charging and discharging reaction, in order to uniformly coat a thin metal oxide on the surface of the titanic oxide compound, it is desirable that moisture necessary for a sol gel reaction be not added in a liquid state.

The above Si-containing coating layer is, for example a silicon oxide represented by SiO$_x$, and SiO$_2$ is preferable. In addition, a compound other than those described above may be included in the coating layer disposed on the surface of the negative electrode active material of the present embodiment.

In addition, the mass of Si (for example, in terms of SiO$_2$ after coating) in the coating layer is preferably 0.5 to 20 mass% with respect to the total mass of the titanic oxide compound (in terms of TiO$_2$). When the mass of Si included in the coating layer is limited to 20 mass% or less with respect to the total mass of the titanic oxide compound, it is possible to prevent a decrease in the battery capacity. In addition, the mass of Si included in the coating layer is more preferably 0.5 to 15 mass% with respect to the total mass of the titanic oxide compound and most preferably 1.0 to 10 mass%. In this manner, when the inorganic component layer (coating layer) containing 0.5 mass% or more of Si with respect to the total mass of the titanic oxide compound is present, it is possible to prevent a reaction between the titanic oxide compound and the nonaqueous electrolyte. In addition, when the mass of Si included in the coating layer is limited to 20 mass% or less with respect to the total mass of the titanic oxide compound, it is possible to prevent a decrease in the battery capacity. In addition, the mass of Si included in the coating layer is more preferably 0.5 to 15 mass% with respect to the total mass of the titanic oxide compound, and most preferably 1.0 to 10 mass%.

As a method of confirming the presence of the coating layer on the surface of the titanic oxide compound and the Si content thereof, for example, a method in which a nonaqueous electrolyte battery is decomposed, a negative electrode portion is extracted, washed, dried, and is then subjected to a pretreatment (an electrode is melted), and then according to ICP emission spectroscopy, the mass of the titanium oxide in the electrode and the value obtained by converting the quantitative analysis value of Si into an oxide are compared for calculation may be exemplified. As a measurement device configured to perform measurement according to such ICP emission spectroscopy, an SPS-4000 commercially available from SII Nanotechnology is an exemplary example.

The mass ratio of Si included in the coating layer with respect to the titanium oxide can be calculated according to a combination of wet analysis by the above ICP emission spectrometry and elemental analysis through TEM-EDX ((transmission electron microscope)-(energy dispersive X-ray)) or SEM-EDX ((scanning electron microscope)-(energy dispersive X-ray spectroscopy)).

When the negative electrode in the battery is an inspection target, a part including the negative electrode active material is extracted, and a polymer material and a conductive agent included therein are removed using a Soxhlet extraction method and a heat treatment together to obtain a negative electrode active material. The negative electrode active material is eluted in an acid solvent, and a total composition amount of the negative electrode active material mainly including titanium oxide and components of the coating layer including Si is calculated using an ICP emission spectrometer. Next, the negative electrode material is embedded in an epoxy resin or the like, the cut sample is then observed through SEM-EDX, the material covering the surface of the negative electrode active material is confirmed, and elemental analysis of the negative electrode active material and the coating layer is performed through the attached EDX.

When the ICP emission spectrometry and SEM-EDX described above are used together, it is possible to calculate the masses of the negative electrode active material and components of the coating layer. In addition, when the elemental analysis is performed through TEM-EDX, the coated negative electrode active material is pretreated for TEM observation, and elemental analysis through EDX is then performed from the center of particles of the negative electrode active material to the end. Therefore, it is possible to observe a trend in which the Si peak increases with respect to the Ti peak from the center to the end.

Next, the intensity ratio of an infrared absorption spectrum in the negative electrode active material of the present embodiment will be described. As described above, the negative electrode active material of the present embodiment has a configuration in which the intensity ratio of an infrared absorption spectrum after pyridine adsorption and desorption on a surface of the negative electrode active material satisfies relationships represented by the following formula [{1(3663 cm$^{-1}$)/I(3738 cm$^{-1}$)}>0.7] and the following formula [{I(2981 cm$^{-1}$)/I(2930 cm$^{-1}$)}<1]. Infrared absorption spectrum characteristics of the negative electrode active material of the present embodiment are obtained when the negative electrode active material includes a titanic oxide compound and additionally includes a metal oxide containing Si atoms. Therefore, in the negative electrode active material of the present embodiment, when a coating layer including a metal oxide containing Si atoms is formed on at least a part of the surface of the titanic oxide compound, the above infrared absorption spectrum characteristics are obtained.

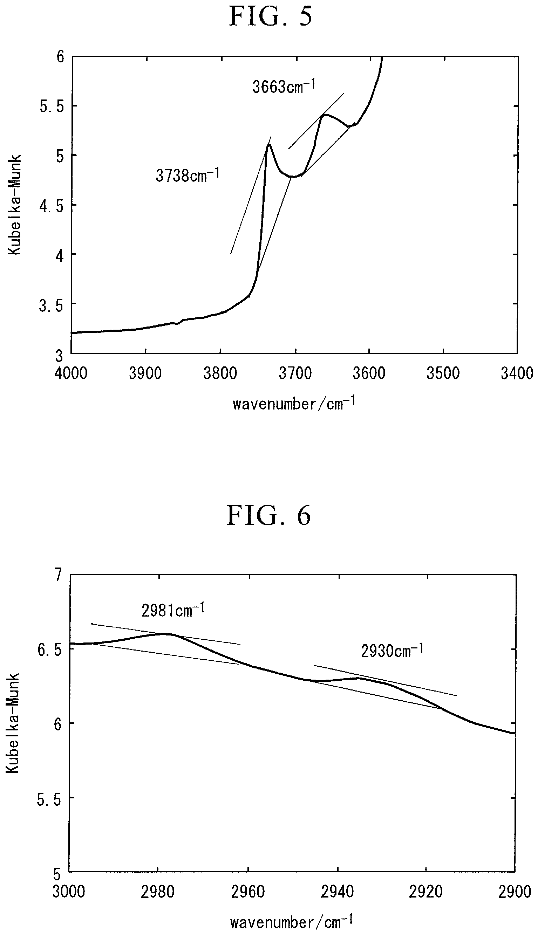

Here, the intensities of an infrared absorption spectrum described in the present embodiment, that is, {1(3663 cm$^{-1}$)), {I(3738 cm$^{-1}$)}, {I(2981 cm$^{-1}$)), and {I(2930 cm$^{-1}$)} indicate integrated intensities in regions of infrared wavenumbers. As shown in the graphs in Fig. 5 and Fig. 6, the integrated intensity is represented by an interval (a height) between a pair of parallel lines when a pair of parallel lines including the background and a peak top are obtained in each infrared absorption spectral curve. That is, each of the above integrated intensities is represented by the intensity that is obtained by subtracting the background from the peak top in the infrared absorption spectrum. Therefore, the intensity ratio of an infrared absorption spectrum is obtained when each ratio is obtained from each of the above integrated intensities.

In addition as shown in the graphs in Fig. 5 and Fig. 6, since the intensities of an infrared absorption spectrum described in the present embodiment have broad characteristics from the peak top to the background, the above infrared wavenumbers are included in regions having a substantially constant width.

In the negative electrode active material of the present embodiment, the peak of the infrared absorption spectrum derived from a Si-containing metal oxide which is a raw material of the coating layer, that is, $SiO_2$, appears in the region of 3663 cm$^{-1}$, and the peak derived from a Si bond, that is, a $SiO_2$ coating specific peak, appears in the region of 3738 cm$^{-1}$. In addition, in the negative electrode active material of the present embodiment, the peak of the infrared absorption spectrum derived from drying conditions when $TiO_2$ serving as a titanic oxide compound is applied to the surface of $SiO_2$ appears in the region of 2930 cm$^{-1}$, and the specific peak derived from the coating form of $TiO_2$ appears in the region of 2981 cm$^{-1}$.

In the negative electrode active material according to the present embodiment, relationships between the peaks of an infrared absorption spectrum specific to $TiO_2$ powder serving as a titanic oxide compound and the peaks of an infrared absorption spectrum derived from the coating form of $SiO_2$ forming the coating layer and drying conditions are optimized according to the above relationships. In the present embodiment, as described above, when the relationships between the peaks of an infrared absorption spectrum are optimized, the coating form with respect to the titanic oxide compound ($TiO_2$) and the metal oxide ($SiO_2$) applied thereon is considered to be optimized.

In other words, when at least any one of the intensity ratios of infrared absorption spectrums is outside the range represented by the following formula [{1(3663 cm$^{-1}$)/I(3738 cm$^{-1}$)}>0.7] and the range represented by the following formula [{1(2981 cm$^{-1}$)/1(2930 cm$^{-1}$)}<1], a coating (bonding) form of the metal oxide ($SiO_2$) on the surface of the titanic oxide compound ($TiO_2$) is considered to be inappropriate.

For example, when the coating layer covering $TiO_2$ is too small, that is, when the amount of Si (in terms of $SiO_2$) is too small, there is a possibility of too much $TiO_2$ being exposed, a reaction with a nonaqueous electrolyte becoming excessive, the internal resistance increasing, and the charging and discharging cycle life decreasing.

On the other hand, when the coating layer covering $TiO_2$ is too large, that is, the amount of Si (in terms of $SiO_2$) is too large, since the thickness of the coating layer which does not contribute to charging and discharging and a coating region increase, charging and discharging characteristics deteriorate.

In addition, while the intensity ratio of an infrared absorption spectrum is in the range represented by the following formula [{1(3663 cm$^{-1}$)/I(3738 cm$^{-1}$)}>0.7], when the intensity ratio represented by the following formula {1(2981 cm$^{-1}$)/I(2930 cm$^{-1}$)} exceeds 1, it is considered that the coating rate is too high, and the coating layer is nonuniformly coated. Therefore, in the above case, a sufficient effect of preventing an excess reaction between an electrolyte solution and $TiO_2$ due to $SiO_2$ coating is not obtained, and the charging and discharging cycle life decreases (refer to Comparative Examples 2 to 5 in the following example sections).

A method of measuring an infrared absorption spectrum of the negative electrode active material of the present embodiment will be described below.

In the present embodiment, it is possible to measure the infrared absorption spectrum of the negative electrode active material according to infrared diffuse reflection spectroscopy using a Fourier transform infrared spectrophotometer (FT-IR).

First, the negative electrode active material to be measured is put into a sample cup, and is placed in a cell of the Fourier transform infrared spectrophotometer.

Next, while nitrogen gas flows into the cell in which the sample cup is placed at 50 mL/min, the negative electrode active material is heated to 500 °C and left for 1 hour. Then, the temperature of the negative electrode active material is lowered to room temperature (25 °C), and raised to 1000 °C again.

Next, the inside of the cell in which the sample cup is placed is depressurized. Pyridine vapor is introduced into the cell for 30 minutes, and thus pyridine is adsorbed onto the surface of the negative electrode active material.

Next, while nitrogen gas flows into the cell at 100 mL/min, the negative electrode active material is left at 100 °C for 1 hour and then heated to 150 °C and left for 1 hour. Accordingly, pyridine that is physically adsorbed onto the surface of the negative electrode active material or hydrogen-bonded thereto is removed.

After the negative electrode active material is treated as described above, infrared diffuse reflection is measured according to the operation of the Fourier transform infrared spectrophotometer.

Then, in the obtained infrared absorption spectrum, the background is excluded, and a peak area is obtained. The peak area can be obtained when a base line is drawn from both ends of the peak.

According to the infrared diffuse reflection spectroscopy described above, since it is possible to detect the presence of functional groups in the specimen, it is possible to clarify the composition of the negative electrode active material serving as a measurement specimen.

Here, in order to perform various measurements on the negative electrode active material included in the negative electrode, it is necessary to extract the negative electrode active material from the negative electrode and provide it for measurement. In this case, first, a battery in a discharged state is disassembled, the negative electrode is extracted, the layer including the negative electrode active material is separated from the negative electrode current collector, an extraction treatment and a heat treatment are then performed to remove the polymer material and the conductive agent, and thus the negative electrode active material can be extracted.

In this case, for example, when the polymer material is removed from the layer including the negative electrode active material separated from the negative electrode current collector according to a Soxhlet extraction method, it is possible to extract the negative electrode active material and the carbon material. In the above Soxhlet extraction method, for example, N-methyl pyrrolidone (NMP) is used as a solvent, and thus the polymer material can be removed from the negative electrode. Then, in a mixture of the negative electrode active material and the carbon material obtained using the Soxhlet extraction method, the carbon material is oxidized with oxygen, ozone, or the like, the carbon material is removed as carbon dioxide, and thus only the negative electrode active material can be extracted.

Here, as measurement conditions for the infrared absorption spectrum using the Fourier transform infrared spectrophotometer, for example, under the conditions listed below, the above negative electrode active material can be fixed to a measurement tool for measurement.

    (a) Fourier transform FTIR device: FTS-60A (commercially available from BioRad Digilab)
    (b) Light source: special ceramic type
    (c) Detector: DTGS (deuterated triglycine sulfate) detector
    (d) Spectral resolution: 4 $cm^{-1}$
    (e) Total number of scans: 256
    (f) Accessory device: diffuse reflection measurement device (commercially available from PIKE Technologies), window plate $CaF_2$
    (g) Reference: gold

Here, the presence of the coating layer including a Si-containing inorganic compound (metal oxide) can also be confirmed according to the following method.

The fact that the Si-containing inorganic compound is present in the titanic oxide compound can be confirmed using a method in which the coated negative electrode active material is dissolved in a sulfuric acid aqueous solution (1 N) and a Si component in the solution is analyzed through ICP emission spectrometry or the like.

On the other hand, the fact that the coating layer including a Si-containing inorganic compound is present on the surface of the active material can be confirmed when pyridine is adsorbed on active material powder, and the infrared absorption spectrum of the powder is observed.

For example, when a case in which a Si-containing inorganic compound is applied to the titanic oxide compound having a $TiO_2(B)$ crystal structure is described, in a solid acid such as $TiO_2(B)$, when the infrared absorption spectrum of titanic oxide compound powder on which pyridine is adsorbed is acquired, a B acid site and an L acid site appear.

The inventors measured an infrared absorption spectrum after pyridine adsorption and desorption on the negative electrode active material in which the coating layer including a Si-containing inorganic compound is formed on the surface of the titanic oxide compound powder as described above and an uncoated negative electrode active material including a titanic oxide compound (refer to examples to be described below). As a result, in the negative electrode active material of the present embodiment in which a Si-containing coating layer is formed using a metal alkoxide under a low dew point environment according to conditions for a production method to be described below, it was confirmed that the intensity ratio of an infrared absorption spectrum satisfied the following formula [{I(3663 cm$^{-1}$)/I(3738 cm$^{-1}$)}>0.7] and the following formula [{I(2981 cm$^{-1}$)/I(2930 cm$^{-1}$)}<1].

In addition, when the negative electrode active material of the present embodiment is observed through TEM-EDX, the fact that the coating layer including a Si-containing inorganic compound is present on the surface of the titanic oxide compound can be directly confirmed. Here, since the coating layer of the present embodiment is very thin, a state in which a coating is present on the surface of particles of the negative electrode active material may not be confirmed in a region in which the applied amount (in terms of SiO$_2$) is small. In this case, when measurement is performed while shifting beams of EDX from the center to the end (the surface of the particle) of the particle, a state in which the peak intensity of Si relatively increases with respect to the peak intensity of a Ti component of the negative electrode active material toward the end can be confirmed.

The above coating layer may be formed on at least a part of the surface of the titanic oxide compound or formed on the entire surface. However, as described above, since a Si-containing metal oxide does not contribute to charging and discharging, when the surface of the titanic oxide compound is completely covered with the Si-containing metal oxide, it is necessary for a coating form such as a film thickness be carefully set so that charging and discharging characteristics do not deteriorate. In addition, when a region covering the surface of the titanic oxide compound is too small, the nonaqueous electrolyte and the titanic oxide compound react excessively, and the cycle life decreases. Therefore, in the present embodiment, it is preferable that the coating form of the metal oxide on the surface of the titanic oxide compound be adjusted while the intensity ratio of an infrared absorption spectrum described above is controlled to be in a specified range.

In the present embodiment, when the Si-containing coating layer is formed on at least a part of the surface of the negative electrode active material according to a production method which will be described below in detail, the intensity ratio of an infrared absorption spectrum can be appropriately controlled to be in the range described above. In addition, when a large part of the surface of the negative electrode active material or the entire surface is covered with the coating layer, an increase in the internal resistance of the battery described above is prevented and an effect of increasing the cycle life is more significantly obtained.

Here, when the negative electrode active material in which the coating layer is formed on the surface of the titanic oxide compound according to the present embodiment is used for a negative electrode of a nonaqueous electrolyte battery, the negative electrode active material may be used alone or used together with another negative electrode active material. As the other negative electrode active material used in this case, for example, a spinel type lithium titanium composite oxide (such as Li$_4$Ti$_5$O$_{12}$), an anatase type, rutile type, or β type titanium composite oxide (such as a-TiO$_2$, r-TiO$_2$, and β-TiO$_2$), an iron complex sulfide (such as FeS and FeS$_2$), a lithium titanium composite oxide having a Ramsdellite type structure (such as Li$_2$Ti$_3$O$_7$, LiTiNbO$_5$, and LiTi$_3$P$_3$O$_{12}$), and TiO$_2$-P$_2$O$_5$, TiP$_2$O$_7$, TiO$_2$-V$_2$O$_5$, TiO$_2$-Nb$_2$O$_5$, MgTi$_2$O$_5$, TiNb$_2$O$_7$, TiO$_2$-SnO$_2$, and TiO$_2$-P$_2$O$_5$-MeO (Me=Cu, Ni, Fe, Co) compounds can be used.

Next, a method of producing the negative electrode active material according to the first embodiment will be described in detail.

According to the production method of the present embodiment to be described below, when the Si-containing coating layer is formed on at least a part of the surface of the titanic oxide compound powder, it is possible to modify surface properties of the titanic oxide compound. Therefore, it is possible to produce the negative electrode active material in which at least a titanic oxide compound is included and the intensity ratio of an infrared absorption spectrum after pyridine adsorption and desorption on a surface of the negative electrode active material satisfies relationships represented by the following formula [{I(3663 cm$^{-1}$)/I(3738 cm$^{-1}$)}>0.7] and the following formula [{I(2981 cm$^{-1}$)/I(2930 cm$^{-l}$)}<1] described above.

The production method of the present embodiment includes a process in which titanic oxide compound powder and a Si-containing metal alkoxide are mixed to obtain a mixture and a process in which the mixture is dried to form a coating layer including a Si-containing metal oxide and a residual organic component on at least a part of surface of the titanic oxide compound powder.

In the production method of the present embodiment, first, the titanic oxide compound is synthesized according to the following synthesis method.

As the titanic oxide compound used for the negative electrode active material according to the present embodiment, a compound synthesized from raw materials or a commercially available compound may be used. As an example of synthesizing a titanic oxide compound, a method of synthesizing a titanic oxide compound having a TiO$_2$(B) crystal structure will be described below.

In order to synthesize a titanic oxide compound having a TiO$_2$(B) crystal structure, for example, a method including a process in which a Ti-containing compound and an alkali element-containing compound are mixed, and the mixture is heated to synthesize an alkali titanate compound, a process in which the alkali titanate compound is reacted with an acid to exchange alkali cations for protons to obtain a protonated titanic oxide compound, and a process in which the protonated titanic oxide compound is heated at least twice can be used.

As starting materials, a Ti-containing compound and an alkali element-containing compound are used. These starting materials are mixed at a predetermined stoichiometric ratio and heated to synthesize an alkali titanate compound. The crystal form of the alkali titanate compound synthesized here may be any form. In addition, the temperature at which the starting materials are heated is not particularly limited, and may be, for example, 800 to 1100 °C.

Here, regarding the above starting materials, as the Ti-containing compound, at least one selected from the group consisting of anatase type $TiO_2$, rutile type $TiO_2$, and $TiCl_4$ compounds can be used. In addition, as the alkali element-containing compound, a compound containing Na, K, or Cs can be used. For example, at least one compound selected from the group consisting of carbonates, hydroxides, and chlorides of the above alkali elements can be used.

Next, the alkali titanate compound obtained in the above procedure is treated with an acid for proton exchange. In this case, first, the alkali titanate compound is washed with distilled water thoroughly to remove impurities. Then, the alkali titanate compound is treated with an acid to exchange alkali cations of the alkali titanate compound for protons to obtain the protonated titanic oxide compound. Here, the alkali titanate compound such as sodium titanate, potassium titanate, and cesium titanate can exchange its alkali cations for protons without destroying a crystal structure.

The above acid treatment can be performed by adding an acid to an alkali titanate compound powder and performing stirring. As the acid used in this case, for example, an acid selected from among hydrochloric acid, nitric acid, and sulfuric acid with a concentration of 0.5 to 2 M can be used

Preferably, the acid treatment continues until sufficient alkali cations are exchanged for protons. An acid treatment time is not particularly limited. For example, the acid treatment is preferably performed for 24 hours or longer at room temperature of about 25 °C, and is more preferably performed for 1 to 2 weeks. Furthermore, when the acid treatment is performed, more preferably, an acid solution is replaced with a new solution every 24 hours.

Based on the above content, conditions for the acid treatment can include, for example, at room temperature (25 °C), sulfuric acid (I M), and a time of 24 hours.

Further, for example, when the acid treatment is performed while vibration such as ultrasonic waves is applied, proton exchange can be performed more smoothly, and a protonated titanic oxide compound in a suitable state is obtained.

In addition, in order to perform proton exchange more efficiently, it is preferable that the alkali titanate compound be pulverized using a ball mill in advance. The pulverization can be performed in, for example, a 100 cm$^2$ container using a zirconia ball with a diameter of about 10 to 15 mm. The zirconia ball is rotated at a rotational speed of 600 to 1000 rpm for 1 to 3 hours. In this manner, when the pulverizing time is set to 1 hour or longer, it is possible to sufficiently pulverize the alkali titanate compound. In addition, when the pulverizing time is set to 3 hours or shorter, it is possible to prevent a compound different from a desired product from being generated according to a mechanochemical reaction.

After the above proton exchange is completed, an alkaline solution such as a lithium hydroxide aqueous solution is added optionally to neutralize the residual acid. Then, the obtained protonated titanic oxide compound is washed with distilled water and then dried. In this case, preferably, the protonated titanic oxide compound is sufficiently washed with water until the pH of washing water is in the range of 6 to 8. On the other hand, in the present embodiment, the process can advance to the next process without neutralization of the residual acid after the acid treatment, washing and drying.

Next, the protonated titanic oxide compound is heated at least twice.

First, in a first heat treatment, the protonated titanic oxide compound is heated at a temperature in the range of 350 to 500 °C for 1 to 3 hours.

Next, the titanic oxide compound obtained in the first heat treatment is subjected to a second heat treatment. In the second heat treatment, the titanic oxide compound is heated at a temperature in the range of 200 to 300 °C for 1 to 24 hours. In this case, the second heat treatment may be performed successively after the first heat treatment, or after the first heat treatment, the temperature of the titanic oxide compound may be lowered to room temperature once, and then the second heat treatment may be performed.

In addition, in the present embodiment, an additional heat treatment may be repeated at a temperature in the range of 200 to 300 °C.

According to the method described above, it is possible to synthesize the titanic oxide compound having a $TiO_2(B)$ crystal structure. Here, in the titanic oxide compound having a $TiO_2(B)$ crystal structure obtained according to such a method, Li may be included in advance by using an Li-containing compound as the starting material, or Li may be inserted according to charging and discharging.

Next, a method of synthesizing a heteroelement-containing titanic oxide compound having a $TiO_2(B)$ crystal structure will be described.

The method of synthesizing a heteroelement-containing titanic oxide compound having a $TiO_2(B)$ crystal structure used for the negative electrode active material according to the present embodiment includes a process in which a Ti-containing compound, an alkali element-containing compound, and a heteroelement-containing compound are mixed, and the mixture is heated to synthesize a heteroelement-containing alkali titanate compound, a process in which the heteroelement-containing alkali titanate compound is reacted with an acid to exchange alkali cations for protons to obtain a protonated heteroelement-containing titanic oxide compound, and a process in which the heteroelement-containing protonated titanic oxide compound is heated to produce a titanic oxide compound having a monoclinic titanium dioxide crystal structure and containing a heteroelement.

First, as starting materials, a Ti-containing compound, an alkali element-containing compound, and a heteroelement-containing compound are used. These starting materials are mixed at a predetermined stoichiometric ratio and heated to synthesize a heteroelement-containing alkali titanate compound. The crystal form of the alkali titanate compound synthesized here may be any form. The temperature at which the starting materials are heated is not particularly limited, but may be, for example, 800 to 1100 °C.

Here, among the starting materials, as the Ti-containing compound and the alkali element-containing compound, those described above can be used.

As the heteroelement-containing compound, for example, a compound including at least one element selected from among Zr, Nb, Mo, YP and B can be used. For example, at least one compound selected from among carbonates, hydroxides, and the like can be used.

In addition, examples of the heteroelement-containing alkali titanate compound include sodium titanate, potassium titanate, and cesium titanate which contain a heteroelement, but the present invention is not limited thereto.

Next, proton exchange according to the acid treatment is performed.

First, the heteroelement-containing alkali titanate compound obtained in the above procedure is washed with distilled water to remove impurities.

Then, when the heteroelement-containing alkali titanate compound is treated with an acid and alkali cations of the alkali titanate compound are exchanged for protons, it is possible to obtain the heteroelement-containing protonated titanic oxide compound. Here, the alkali titanate compound such as sodium titanate, potassium titanate, and cesium titanate can exchange its alkali cations for protons without destroying a crystal structure, and this similarly applies to the heteroelement-containing alkali titanate compound.

The above acid treatment can be performed by adding an acid to an alkali titanate compound powder and performing stirring. As the acid used in this case, an acid selected from among hydrochloric acid, nitric acid, and sulfuric acid with a concentration of 0.5 to 2 M can be used.

Preferably, the acid treatment continues until sufficient alkali cations are exchanged for protons. An acid treatment time is not particularly limited. For example, when hydrochloric acid with a concentration of about 1 M is used at room temperature of about 25 °C, the acid treatment is preferably performed for 24 hours or more, and more preferably for 1 to 2 weeks. Furthermore, when the acid treatment is performed, more preferably, an acid solution is replaced with a new solution every 24 hours.

In addition, as described above, the acid treatment may be performed while vibration such as ultrasonic waves is applied to the alkali titanate compound. In addition, in order to perform proton exchange more efficiently, it is preferable that the alkali titanate compound be pulverized using a ball mill in advance.

After the above proton exchange is completed, an alkaline solution such as a lithium hydroxide aqueous solution is added optionally to neutralize the residual acid. Then, the obtained heteroelement-containing protonated titanic oxide compound is washed with distilled water and then dried. In this case, preferably, the protonated titanic oxide compound is sufficiently washed with water until the pH of washing water is in the range of 6 to 8. On the other hand, in the present embodiment, the process can advance to the next process without neutralization of the residual acid after the acid treatment, washing and drying.

Next, when the heteroelement-containing protonated titanic oxide compound is heated, it is possible to obtain the heteroelement-containing titanic oxide compound having a $TiO_2(B)$ crystal structure.

In the heat treatment temperature in this case, since the optimal temperature differs depending on conditions such as a composition, a particle size, a crystal shape and the like of the protonated titanic oxide compound, the temperature is appropriately determined depending on the protonated titanic oxide compound, and is preferably in the range of 250 to 500 °C. When the heat treatment temperature is 250 °C or more, a negative electrode active material which has favorable crystallinity and in which formation of impurity phases of $H_2Ti_8O_{17}$ is prevented, and which has favorable electrode capacity, charging and discharging efficiency, and cycle characteristics is obtained. In addition, when the heat treatment temperature is 500 °C or less, since the formation of impurity phases of $H_2Ti_8O_{17}$ and anatase type $TiO_2$ is prevented, a negative electrode active material capable of preventing a decrease in electrode capacity is obtained. In addition, the heat treatment temperature of the protonated titanic oxide compound is more preferably 300 to 400 °C.

Here, the heat treatment time can be set in a range of 30 minutes to 24 hours or shorter depending on the temperature. For example, when the temperature is 300 °C or more and 400 °C or less, a time for 1 hour to 3 hours or shorter can be set.

According to the method described above, it is possible to synthesize the heteroelement-containing titanic oxide compound having a $TiO_2(B)$ crystal structure. Here, in the heteroelement-containing titanic oxide compound having a $TiO_2(B)$ crystal structure obtained according to such a method, Li may be included in advance by using the Li-containing compound as the starting material, or Li may be inserted according to charging and discharging.

Next, in the production method of the present embodiment, when titanic oxide compound powder is mixed with the Si-containing metal alkoxide in an organic solvent for dilution, for example, ethanol, a metal oxide precursor is formed on the surface of the titanic oxide compound powder.

Next, when the powder having the surface on which the metal oxide precursor is formed is subjected to a drying treatment, the metal oxide precursor is polymerized and a coating layer including the metal oxide can be formed.

The above method is generally referred to as a sol-gel method. However, the point in this method is that moisture necessary for hydrolysis and polymerization reactions is not added from the outside as water in a liquid state in order to prevent excess metal oxide precursor and a nonuniform coating layer from being formed on the surface of the titanic oxide compound.

The above drying treatment is preferably performed at a low temperature. In addition, in order for the organic component to remain inside the coating layer including an inorganic compound, the drying temperature is desirably 0 to 50 °C, and more desirably 10 to 40 °C. When the drying temperature is lower than the lower limit of the above range, a time required for drying in hydrolysis and polymerization reactions and drying a dilution solvent and the like becomes longer. On the other hand, when the drying temperature is higher than the upper limit of the above range, since hydrolysis and polymerization reactions, and volatilization of a dilution solvent rapidly occur, the coating layer is nonuniformly formed, which is not preferable. In addition, when the drying temperature is higher than the upper limit of the above range, since the solvent is quickly volatilized, and the metal oxide precursor and the residual organic component separated in the polymerization reaction are reduced in amount, the surface of the titanic oxide compound powder is not uniformly coated, and the coating layer may become mottled, which is not preferable. Therefore, the drying treatment is preferably performed at the above temperature.

In addition, as the metal alkoxide, a condensation polymer such as polymethyl silicate or polyethyl silicate is more preferably used than a monomer such as methyl silicate or ethyl silicate because the residual organic component can efficiently remain in the inorganic coating. In addition, as described above, a metal alkoxide containing only Si as a metal to be contained is preferable in consideration of raw material costs and an increase in weight during coating.

Furthermore, when the negative electrode active material according to the present embodiment is obtained, the drying treatment is performed in a low humidity environment so that extra moisture is not taken into the surface of the active material. As favorable drying conditions, when an environment in which a dew point is desirably 0 °C or less, more desirably -20 °C or less, and most desirably -40 °C or less is set, it is possible to form an Si-containing coating layer without extra moisture taken in. In this case, for example, compared to general laboratory environments (temperature: about 25 °C, humidity: 25 to 70%), in the production conditions according to the present embodiment, a drying rate decreases, and the amount of moisture taken in when the coating layer is formed decreases due to the decreased drying rate. Therefore, it is possible to uniformly form the coating layer including a Si-containing inorganic component and take the organic component (the residual organic component of the metal alkoxide raw material) into the uncoated layer. The amount of the organic component taken into the coating layer in this case can be adjusted by adding an organic solvent with a high boiling point when a metal alkoxide, a titanic oxide compound powder, and a dilution solvent (such as ethanol) are mixed in advance in addition to the above drying conditions.

In addition, as a drying method, in addition to the above method in which a dew point is adjusted, for example, a method in which a mixture of a metal alkoxide, a titanic oxide compound powder, and a dilution solvent (such as ethanol) is dried in a tank in which the interior has been purged with a drying gas (for example, nitrogen or argon) can be applied.

Here, the sol-gel method described above is particularly suitable when the titanic oxide compound has a $TiO_2(B)$ crystal structure. The titanic oxide compound having a $TiO_2(B)$ crystal structure has an advantage in that there is no need to add a catalyst because its catalytic action promotes an alkoxide polymerization reaction.

(Second embodiment)

Next, a negative electrode active material according to a second embodiment will be described in detail.

In the present embodiment, configurations and conditions the same as in the negative electrode active material and the production method thereof according to the above-described first embodiment will not be described in detail.

The negative electrode active material according to the second embodiment includes at least a titanic oxide compound and the intensity ratio of an infrared absorption spectrum after pyridine adsorption and desorption on a surface of the negative electrode active material satisfies relationships represented by the following Formulae (3) and (4).

$$\{I(3663 \text{ cm}^{-1})/I(3738 \text{ cm}^{-1})\} < 0.7 \ ..... (3)$$

$$\{I(2981 \text{ cm}^{-1})/I(2930 \text{ cm}^{-1})\} > 1 \ ..... (4)$$

Here, in Formulae (1) and (2), {I(3663 cm$^{-1}$)}, {I(3738 cm$^{-1}$)), {I(2981 cm$^{-1}$)}, and {1(2930 cm$^{-1}$)} indicate integrated intensities in regions of infrared wavenumbers.

Infrared absorption spectrum characteristics of the negative electrode active material of the present embodiment are obtained when the negative electrode active material includes a titanic oxide compound and additionally includes a metal oxide containing Si atoms as in the first embodiment. Therefore, as in the first embodiment, in the negative electrode active material of the present embodiment, when a coating layer including a metal oxide containing Si atoms is formed on at least a part of the surface of the titanic oxide compound, the above infrared absorption spectrum characteristics are obtained. That is, when the coating layer including a Si-containing metal oxide is formed on the surface of the titanic oxide compound, surface properties of the titanic oxide compound are modified, and thus the negative electrode active material in which the intensity ratio of an infrared absorption spectrum measured using, for example a Fourier transform infrared spectrophotometer (FT-IR), is in the above range is obtained.

Here, the negative electrode active material according to the second embodiment is different from the negative electrode active material described above in the first embodiment in that the intensity ratio of an infrared absorption spectrum is different, and specifically, both of the relationships represented by Formula (3) and Formula (4) are satisfied.

As in the first embodiment, the intensities of an infrared absorption spectrum described in the present embodiment, that is, {I(3663 cm$^{-1}$)}, {I(3738 cm$^{-1}$)}, {I(2981 cm$^{-1}$)), and {1(2930 cm$^{-1}$)} are represented by an interval (a height) between a pair of parallel lines including the background and the peak top in each infrared absorption spectral curve (refer to Fig. 5 and Fig. 6). Therefore, the intensity ratio of an infrared absorption spectrum is obtained when each ratio is obtained from each of the above integrated intensities.

As in the first embodiment, in the negative electrode active material according to the present embodiment, the peak of the infrared absorption spectrum derived from $SiO_2$ which is a raw material of the coating layer appears in the region of 3663 cm$^{-1}$. In addition, the $SiO_2$ coating specific peak appears in the region of 3738 cm$^{-1}$. In addition, in the negative electrode active material of the present embodiment, the peak of the infrared absorption spectrum derived from drying conditions when $TiO_2$ is applied to the surface of $SiO_2$ appears in the region of 2930 cm$^{-1}$, and the specific peak derived from the coating form of $TiO_2$ appears in the region of 2981 cm$^{-1}$.

In the negative electrode active material according to the present embodiment, the peaks of the infrared absorption spectrum specific to $TiO_2$ powder serving as a titanic oxide compound, and the peaks of an infrared absorption spectrum derived from the coating form of $SiO_2$ forming the coating layer and drying conditions are optimized according to the relationships represented by Formula (3) and Formula (4). Therefore, as in the first embodiment, in the present embodiment, when the relationships of the peaks of an infrared absorption spectrum are optimized, the coating form between the titanic oxide compound ($TiO_2$) and the metal oxide ($SiO_2$) applied thereon is considered to be optimized.

On the other hand, as in the first embodiment, when at least any one of the intensity ratios of infrared absorption spectrums is outside the range represented by the following formula [{I(3663 cm$^{-1}$)/I(3738 cm$^{-1}$)}<0.7] and the range represented by the following formula [{1(2981 cm$^{-1}$)/I(2930 cm$^{-1}$)}>], a coating (bonding) form of the metal oxide ($TiO_2$) on the surface of the titanic oxide compound ($TiO_2$) is considered to be inappropriate.

That is, when the coating layer covering $TiO_2$ is too small (when the amount of Si is too small), there is a possibility of too much $TiO_2$ being exposed, a reaction with a nonaqueous electrolyte becoming excessive, the internal resistance increasing, and the charging and discharging cycle life decreasing.

On the other hand, when the coating layer covering $TiO_2$ is too large (when the amount of Si is too large), since the thickness of the coating layer which does not contribute to charging and discharging and a coating region increase, charging and discharging characteristics deteriorate.

In addition, while the intensity ratio of an infrared absorption spectrum is in the range represented by the following formula [{1(2981 cm$^{-1}$)/I(2930 cm$^{-1}$)}>1], when the intensity ratio represented by the following formula {1(3663 cm$^{-1}$)/I(3738 cm$^{-1}$)} exceeds 0.7, it is considered that the coating rate is too high, and the coating layer is nonuniformly coated. Therefore, in the above case, a sufficient effect of preventing an excess reaction between an electrolyte solution and $TiO_2$ due to $SiO_2$ coating is not obtained, and the charging and discharging cycle life decreases (refer to Comparative Examples 2 to 5 in the following example sections).

A production method according to the present embodiment will be described below.

The production method of the present embodiment includes a process in which a titanic oxide compound powder and a sodium silicate are mixed to obtain a mixture and a process in which the mixture is neutralized and dried to form a coating layer including a Si-containing metal oxide on the surface of the titanic oxide compound powder.

Specifically, first, according to the same method as in the first embodiment, a titanic oxide compound having a $TiO_2$(B) crystal structure is synthesized.

Then, in the present embodiment, a titanic oxide compound powder is mixed with pure water and a sodium silicate to form a slurry state.

Next, an acid, for example, a sulfuric acid aqueous solution of about 0.5 M is added dropwise to the powder, and neutralization and washing with water are performed until sulfate ions cannot be detected in washing water, and then a powder portion is separated off.

Then, when the separated powder is dried in air at a temperature of 100 to 150 °C, it is possible to produce a negative electrode active material in which a coating film including $SiO_2$ is formed on the surface of the titanic oxide compound.

As in the above first embodiment, the inventors measured an infrared absorption spectrum of the negative electrode active material according to the second embodiment after pyridine adsorption and desorption on the surface. As a result, as shown in the present embodiment, in the negative electrode active material in which a Si-containing coating layer is formed using a sodium silicate, it is confirmed that the intensity ratio of an infrared absorption spectrum satisfies the following formulae $[I(3663 \text{ cm}^{-1})/I(3738 \text{ cm}^{-1})]<0.7]$ and $[\{1(2981 \text{ cm}^{-1})/I(2930 \text{ cm}^{-1})\}>1]$.

As in the first embodiment, according to the negative electrode active material of the present embodiment, when the material is applied to a negative electrode of a nonaqueous electrolyte battery, it is possible to realize a nonaqueous electrolyte battery in which an increase in the internal resistance is prevented and the cycle life significantly increases.

As described above, in the negative electrode active materials according to the first embodiment and the second embodiment, according to the production method of the above-described embodiments, a coating layer including a Si-containing metal oxide is formed on at least a part of the surface of the titanic oxide compound. That is, in the negative electrode active material according to the first embodiment, the intensity ratio of an infrared absorption spectrum in the negative electrode active material in which a Si-containing coating layer is formed using a metal alkoxide in a low dew point environment satisfies the following formula $[\{I(3663 \text{ cm}^{-1})/I(3738 \text{ cm}^{-1})\}>0.7]$ and the following formula $[\{I(2981 \text{ cm}^{-1})/I(2930 \text{ cm}^{-1})\}<1]$. On the other hand, in the negative electrode active material according to the second embodiment, the intensity ratio of an infrared absorption spectrum in the negative electrode active material in which a Si-containing coating layer is formed using a sodium silicate satisfies the following formulae $[\{I(3663 \text{ cm}^{-1})/I(3738 \text{ cm}^{-1})\}<0.7]$ and $[\{I(2981 \text{ cm}^{-1})/I(2930 \text{ cm}^{-1})\}>1]$. When such a negative electrode active material is applied to the negative electrode of the nonaqueous electrolyte battery, it is possible to realize a nonaqueous electrolyte battery in which an increase in the internal resistance is prevented and the cycle life significantly increases.

Here, as described above, the active material of the negative electrode active material according to the present embodiment can be used for not only the negative electrode but also for the positive electrode. In any application, it is possible to obtain excellent charging and discharging cycle performance. That is, a charging and discharging cycle life therefor is an effect obtained when the intensity ratio of an infrared absorption spectrum described above is optimized, that is, the coating layer including a Si-containing metal oxide is appropriately arranged on the surface of the titanic oxide compound. The same effect is obtained when the material is applied to the negative electrode and the positive electrode.


(Third embodiment)

Next, a nonaqueous electrolyte battery according to a third embodiment will be described.

The nonaqueous electrolyte battery according to the present embodiment includes at least a positive electrode, a negative electrode including the negative electrode active material according to the first embodiment or the second embodiment, and a nonaqueous electrolyte. More specifically, the nonaqueous electrolyte battery according to the present embodiment includes an exterior member, a positive electrode accommodated in the exterior member, a negative electrode that is spatially separated from the positive electrode in the exterior member, and is accommodated with, for example, a separator therebetween, and includes the above negative electrode active material, and a nonaqueous electrolyte filled into the exterior member.

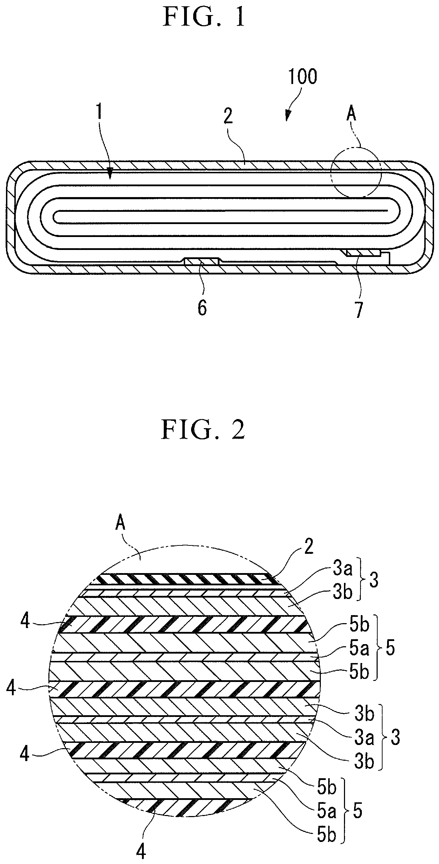

As an example of the nonaqueous electrolyte battery according to the present embodiment, a flat nonaqueous electrolyte battery (nonaqueous electrolyte battery) 100 shown in Fig. 1 and Fig. 2 will be described. Fig. 1 is a schematic cross-sectional view of a flat nonaqueous electrolyte battery 100. In addition, Fig. 2 is an enlarged cross-sectional view of a part A shown in Fig. 1.

Here, Fig. 1 and Fig. 2 are schematic diagrams explaining the nonaqueous electrolyte battery according to the present embodiment, and the same configurations throughout the present embodiment are denoted with the same reference numerals and repeated descriptions will be omitted.

In addition, the nonaqueous electrolyte battery 100 in Fig. 1 and Fig. 2 has parts whose shapes, sizes, ratios, and the like are different from those of an actual device, and these can be appropriately changed in design with reference to the following description and known techniques.

The nonaqueous electrolyte battery 100 shown in Fig. 1 has a configuration in which a flat winding electrode group 1 is accommodated in an exterior member 2. The exterior member 2 may be laminate film formed in a bag shape or a metal container. In addition, the flat winding electrode group 1 is formed by winding a laminate in which a negative electrode 3, a separator 4, a positive electrode 5, and a separator 4 are laminated in order from the outside, that is, from the side of the exterior member 2 in a spiral shape and press molding the wound laminate. As shown in Fig. 2, the negative electrode 3 positioned on the outermost circumference has a configuration in which a negative electrode layer 3b is formed on one inner side surface of a negative electrode current collector 3a. The negative electrode 3 in a portion other than the outermost circumference has a configuration in which the negative electrode layer 3b is formed on both surfaces of the negative electrode current collector 3a. Therefore, the flat nonaqueous electrolyte battery 100 according to the present embodiment has a configuration in which the negative electrode active material in the negative electrode layer 3b includes the negative electrode active material according to the first embodiment. In addition, the positive electrode 5 has a configuration in which a positive electrode layer 5b is formed on both surfaces of a positive electrode current collector 5a. Here, in place of the separator 4, a gel-like nonaqueous electrolyte to be described below may be used.

In the winding electrode group 1 shown in Fig. 1, a negative electrode terminal 6 is electrically connected to the negative electrode current collector 3a of the negative electrode 3 on the outermost circumference in the vicinity of its outer peripheral end. A positive electrode terminal 7 is electrically connected to the positive electrode current collector 5a of the inside positive electrode 5. The negative electrode terminal 6 and the positive electrode terminal 7 extend to the outside of the bag-like exterior member 2 or connected to an extraction electrode that is included in the exterior member 2.

When the nonaqueous electrolyte battery 100 including an exterior member formed of a laminate film is produced, the winding electrode group 1 in which the negative electrode terminal 6 and the positive electrode terminal 7 are connected is inserted into the bag-like exterior member 2 having an opening, a liquid nonaqueous electrolyte is injected from the opening of the exterior member 2, and additionally, the opening of the bag-like exterior member 2 is thermally sealed with the negative electrode terminal 6 and the positive electrode terminal 7 interposed therebetween. Therefore, the winding electrode group 1 and the liquid nonaqueous electrolyte are completely sealed.

In addition, when the nonaqueous electrolyte battery 100 including an exterior member formed as a metal container is produced, the winding electrode group 1 in which the negative electrode terminal 6 and the positive electrode terminal 7 are connected is inserted into a metal container having an opening, a liquid nonaqueous electrolyte is injected from the opening of the exterior member 2, and additionally, a lid is attached to the metal container to seal the opening.

For the negative electrode terminal 6, for example, a material having electric stability and conductivity in the range of 1.0 V or more and 3.0 V or less which is a potential with respect to lithium can be used. Specifically, aluminum or an aluminum alloy containing an element such as Mg, Ti, Zn, Mn, Fe, Cu, or Si is an exemplary example. In addition, more preferably, the negative electrode terminal 6 is made of the same material as the negative electrode current collector 3a in order to reduce a contact resistance with the negative electrode current collector 3a.

For the positive electrode terminal 7, a material having electric stability and conductivity in the range of 3.0 to 4.25 V which is a potential with respect to lithium may be exemplified. Specifically, aluminum or an aluminum alloy containing an element such as Mg, Ti, Zn, Mn, Fe, Cu, or Si may be exemplified. Preferably, the positive electrode terminal 7 is made of the same material as the positive electrode current collector 5a in order to reduce a contact resistance with the positive electrode current collector 5a.

The components of the nonaqueous electrolyte battery 100 which are the exterior member 2, the negative electrode 3, the positive electrode 5, the separator 4, and the nonaqueous electrolyte will be described below in detail.

(1) Exterior member

The exterior member is formed of a laminate film with a thickness of 0.5 mm or less. Alternatively, as the exterior member, a metal container with a thickness of 1.0 mm or less is used.

The shape of the exterior member 2 can be appropriately selected from among a flat shape (a thin shape), a square shape, a cylindrical shape, a coin shape, a button shape, a sheet shape, and a laminate shape.

Examples of the exterior member 2 include an exterior member for a small battery mounted in, for example, a portable electronic device, and an exterior member for a large battery mounted in a two-wheel to four-wheel vehicle according to the size of the battery.

In addition, when the exterior member 2 formed of a laminate film is used, a multilayer film in which a metal layer is interposed between resin layers is used. In this case, as the metal layer, an aluminum foil or an aluminum alloy foil is preferably used for weight reduction. In addition, as the resin layer, a polymer material, for example, polypropylene (PP), or polyethylene (PE), nylon, polyethylene terephthalate (PET) can be used. The laminate film can be formed into the shape of the exterior member by sealing through thermal fusion. In addition, when the laminate film is used for the exterior member 2, a laminate film with a thickness of 0.2 mm or less is more preferable.

When the exterior member 2 formed of a metal container is used, a metal container made of aluminum or an aluminum alloy is produced. As such an aluminum alloy, an alloy containing an element such as magnesium, zinc, or silicon is preferable. In addition, when a transition metal such as iron, copper, nickel, or chromium is included in the aluminum alloy, the amount thereof is preferably limited to 100 ppm by mass or less. In addition, when the exterior member 2 formed of a metal container is used, a metal container with a thickness of 0.5 mm or less is preferably used, and a metal container with a thickness of 0.2 mm or less is more preferably used.

(2) Negative electrode

The negative electrode 3 includes the negative electrode current collector 3a and the negative electrode layer 3b that is formed on one surface or both surfaces of the negative electrode current collector 3a, and includes a negative electrode active material, a conductive agent, and a binding agent.

As the negative electrode active material, the negative electrode active material according to the first embodiment or the second embodiment described above is used.

In the nonaqueous electrolyte battery 100 in which the negative electrode 3 including the negative electrode layer 3b containing such a negative electrode active material is assembled, an increase in the internal resistance is prevented as described above. Therefore, the battery has high current characteristics and excellent charging and discharging cycle performance.

The conductive agent improves current collection performance of the negative electrode active material, and minimizes a contact resistance between the negative electrode active material and the negative electrode current collector. Examples of the conductive agent include agents containing acetylene black, carbon black, coke, graphite, carbon nanofibers, carbon nanotubes, or the like.

The binding agent fills gaps between dispersed negative electrode active materials, binds the negative electrode active material and the conductive agent, and binds the negative electrode active material and the negative electrode current collector. Examples of the binding agent include agents containing polytetrafluoroethylene (PTFE), polyvinylidene fluoride (PVdF), fluorocarbon rubber, styrene butadiene rubber (SBR), an ethylene-propylene-diene copolymer (EPDM), a cellulose water-soluble polymer (such as carboxymethyl cellulose (CMC)), or the like.

The negative electrode active material, the conductive agent, and the binding agent in the negative electrode layer 3b are preferably mixed at proportions of 68 mass% or more and 96 mass% or less, 2 mass% or more and 30 mass% or less, and 2 mass% or more and 30 mass% or less. In addition, the negative electrode active material, the conductive agent, and the binding agent are more preferably mixed at proportions of 70 mass% or more and 96 mass% or less, 2 mass% or more and 28 mass% or less, and 2 mass% or more and 28 mass% or less.

When the amount of the conductive agent is set to 2 mass% or more, it is possible to improve current collection performance of the negative electrode layer 3b and improve high current characteristics of the nonaqueous electrolyte battery 100.

In addition, when the amount of the binding agent is set to 2 mass% or more, it is possible to enhance the binding property between the negative electrode layer 3b and the negative electrode current collector 3a, and it is possible to increase the cycle life.

Meanwhile, it is preferable that the amount of each of the conductive agent and the binding agent be set to 28 mass% or less to increase the capacity.

The negative electrode current collector 3a is preferably an aluminum foil or an aluminum alloy foil containing an element such as Mg, Ti, Zn, Mn, Fe, Cu, and Si which is electrochemically stable in a potential range of 1.0 V or more. In addition, the thickness of the negative electrode current collector 3a is preferably 8 to 25 $\mu$m, and more preferably in the range of 5 to 20 $\mu$m. In addition, as the negative electrode current collector 3a, a stainless steel foil, a titanium foil, a copper foil, or a nickel foil can be used in addition to the above examples. However, for example, when the potential of the negative electrode with respect to lithium metal is higher than 0.3 V or when a lithium titanate compound is used as the negative electrode active material, the above aluminum foil or aluminum alloy foil is preferably used because it is possible to reduce the battery weight.

When the above aluminum foil is used as the negative electrode current collector 3a, the purity of the aluminum foil is preferably 99% or more.

In addition, when the above aluminum alloy foil is used as the negative electrode current collector 3a, it is preferable that the amount of a transition metal such as Fe and Cu be set to 1% mass or less.

The negative electrode 3 is produced, for example, when a negative electrode active material, a conductive agent, and a binding agent are suspended in a common solvent to prepare a slurry, the slurry is applied to one surface or both surfaces of the negative electrode current collector 3a and dried, and pressing is then performed. Alternatively, the negative electrode 3 may be produced when a negative electrode active material, a conductive agent, and a binding agent are formed into a pellet-like negative electrode layer 3b, and the layer is arranged and formed on the negative electrode current collector 3a.

(3) Positive electrode

The positive electrode 5 includes the positive electrode current collector 5a and the positive electrode layer 5b that is formed on one surface or both surfaces of the positive electrode current collector 5a and includes a positive electrode active material, a conductive agent, and a binding agent. As the positive electrode active material, for example, an oxide, a sulfide, or a polymer can be used.

As the oxide used for the positive electrode active material, for example, a lithium inserted manganese dioxide ($MnO_2$), iron oxide, copper oxide, and nickel oxide, a lithium manganese composite oxide (for example, $Li_xMn_2O_4$ or $Li_xMnO_2$), a lithium nickel composite oxide (for example, $Li_xNiO_2$), a lithium cobalt composite oxide ($Li_xCoO_2$), a lithium nickel cobalt composite oxide (for example, $LiNi_{1-y}Co_yO_2$), a lithium manganese cobalt composite oxide (for example, $Li_xMn_yCo_{1-y}O_2$), a lithium nickel cobalt manganese composite oxide (for example, $LiNi_{1-y-z}Co_yMn_zO_2$), a lithium nickel cobalt aluminum composite oxide (for example, $LiNi_{1-y-z}Co_yAl_zO_2$), a lithium manganese nickel composite oxide having a spinel structure ($Li_xMn_{2-y}Ni_yO_4$), a lithium phosphorus oxide having an olivine structure (for example, $Li_xFePO_4$, $Li_xFe_{1-y}Mn_yPO_4$, and $Li_xCoPO_4$), iron sulfate ($Fe_2(SO_4)_3$), or a vanadium oxide (for example $V_2O_5$) can be used. Here, the above x, y and z are preferably $0<x\leq1$, $0\leq y\leq1$, and $0\leq z\leq1$.

As the polymer used for the positive electrode active material, for example, a conductive polymer material such as polyaniline or polypyrrole or a disulfide polymer material can be used.

In addition, an organic material such as sulfur (S) or carbon fluoride and an inorganic material can be exemplified as the positive electrode active material.

Among the above examples, as a preferable positive electrode active material, a lithium manganese composite oxide ($Li_xMn_2O_4$), a lithium nickel composite oxide ($Li_xNiO_2$), a lithium cobalt composite oxide ($Li_xCoO_2$), a lithium nickel cobalt composite oxide ($Li_xNi_{1-y}Co_yO_2$), a lithium manganese nickel composite oxide having a spinel structure ($Li_xMn_{2-y}Ni_yO_4$), a lithium manganese cobalt composite oxide ($Li_xMn_yCo_{1-y}O_2$), a lithium nickel cobalt manganese composite oxide (for example, $LiNi_{1-y-z}Co_yMn_zO_2$), and a lithium iron phosphate ($Li_xFePO_4$) which have a high positive electrode voltage may be exemplified. Here, the above x, y, and z are preferably $0<x\leq1$, $0\leq y\leq1$, and $0\leq z\leq1$.

Among the above examples, as a more preferable positive electrode active material, a lithium cobalt composite oxide and a lithium manganese composite oxide may be exemplified. Since these positive electrode active materials have high ion conductivity, it is difficult for a diffusion reaction of lithium ions in the positive electrode active material to become a rate-determining step in a combination with the above-described negative electrode active material. Therefore, the positive electrode active material including the above composition has excellent compatibility with a lithium titanium composite oxide in the negative electrode active material.

In addition, when a room temperature molten salt is used as the nonaqueous electrolyte, a lithium iron phosphate, $Li_xVPO_4F$, a lithium manganese composite oxide, a lithium nickel composite oxide, and a lithium nickel cobalt composite oxide are preferable in consideration of the cycle life. This is because reactivity between the positive electrode active material and the room temperature molten salt is reduced.

Furthermore, in the present embodiment, as the positive electrode active material, the same active material as the negative electrode active material according to the present embodiment described above can be applied. Further, if such an active material is used as the positive electrode active material, the internal resistance is reduced and an effect of realizing this charging and discharging cycle life is obtained.

The conductive agent improves current collection performance of the positive electrode active material and minimizes a contact resistance between the positive electrode active material and the positive electrode current collector. Examples of the conductive agent include agents containing acetylene black, carbon black, artificial graphite, natural graphite, a conductive polymer, carbon nanofibers, carbon nanotubes, or the like.

The binding agent fills gaps between dispersed positive electrode active materials, binds the positive electrode active material and the conductive agent, and binds the positive electrode active material and the positive electrode current collector. Examples of the binding agent include agents containing polytetrafluoroethylene (PTFE), polyvinylidene fluoride (PVdF), or fluorocarbon rubber. In addition, as the binding agent, a modified PVdF in which at least one of the above materials is substituted with another substituent, a vinylidene fluoride-propylene hexafluoride copolymer, a polyvinylidene fluoride-tetrafluoroethylene-propylene hexafluoride terpolymer, or the like can be used.

In addition, as the organic solvent for dispersing a binding agent, for example, N-methyl-2-pyrrolidone (NMP) or dimethylformamide (DMF) can be used.

In the positive electrode layer 5b, preferably, the positive electrode active material and the binding agent are mixed at proportions of 80 mass% or more and 98 mass% or less, and 2 mass% or more and 20 mass% or less. When the amount of the binding agent is set to 2 mass% or more, a sufficient electrode strength is obtained. In addition, when the amount of the binding agent is set to 20 mass% or less, it is possible to reduce the mixed amount of an insulator of an electrode and decrease the internal resistance.

In addition, when the conductive agent is added to the positive electrode layer 5b, the positive electrode active material, the conductive agent, and the binding agent are preferably mixed at proportions of 77 mass% or more and 95 mass% or less, 2 mass% or more and 20 mass% or less, and 3 mass% or more and 15 mass% or less, and more preferably mixed at proportions of 80 mass% or more and 95 mass% or less, 3 mass% or more and 18 mass% or less, and 2 mass% or more and 17 mass% or less.

When the amount of the conductive agent is set to 3 mass% or more, the above-described effects can be exhibited. In addition, when the amount of the conductive agent is set to 18 mass% or less, it is possible to reduce decomposition of the nonaqueous electrolyte on the surface of the conductive agent during high temperature storage.

The positive electrode current collector 5a is preferably, for example, an aluminum foil with a thickness of 8 to 25 $\mu$m or an aluminum alloy foil containing an element such as Mg, Ti, Zn, Mn, Fe, Cu, or Si. In addition, as the positive electrode current collector 5a, a stainless steel foil, a titanium foil, or the like can be used.

When the above aluminum foil is used as the positive electrode current collector 5a, the purity of the aluminum foil is preferably 99% or more.

In addition, when the above aluminum alloy foil is used as the positive electrode current collector 5a, it is preferable that the amount of a transition metal such as Fe and Cu be set to 1% mass or less.

The positive electrode 5 can be produced using, for example, a method in which a positive electrode active material, a conductive agent, and a binding agent are suspended in a common solvent to prepare a slurry, the slurry is applied to one surface or both surfaces of the positive electrode current collector 5a and dried, and pressing is then performed. Alternatively, the positive electrode 5 may be produced when a positive electrode active material, a conductive agent and a binding agent are formed into a pellet-like positive electrode layer 5b, and the layer is arranged and formed on the positive electrode current collector 5a.

(4) Nonaqueous electrolyte

As the nonaqueous electrolyte, for example, a liquid nonaqueous electrolyte prepared by dissolving a solute in an organic solvent or a gel-like nonaqueous electrolyte in which a liquid electrolyte and a polymer material are combined, can be used.

In the liquid nonaqueous electrolyte, preferably, a solute is dissolved at a concentration of 0.5 mol/L or more and 2.5 mol/L or less in an organic solvent.

As an example of the solute, at least one lithium salt selected from among lithium perchlorate ($LiClO_4$), lithium hexafluorophosphate ($LiPF_6$), lithium tetrafluoroborate ($LiBF_4$), lithium arsenic hexafluoride ($LiAsF_6$), lithium trifluoromethasulfonate ($LiCF_3SO_3$), bistrifluoromethylsulfonylimide lithium [$LiN(CF_3SO_2)_2$], [$LiN(C_2F_5SO_2)_2$], [$Li(CF_3SO_2)_3C$], and $LiB[(OCO)_2]_2$ is preferable. Such a lithium salt is dissolved at a concentration in the range of 0.5 to 2 mol/L in an organic solvent to prepare an organic electrolyte solution.

A solute that hardly oxidizes even at a high potential is preferable, and $LiPF_6$ is most preferable.

Examples of the organic solvent include a cyclic carbonate such as propylene carbonate (PC), ethylene carbonate (EC), and vinylene carbonate; a chain carbonate such as diethyl carbonate (DEC), dimethyl carbonate (DMC), and methyl ethyl carbonate (MEC); a cyclic ether such as tetrahydrofuran (THF), 2-methyltetrahydrofuran (2MeTHF), and dioxolane (DOX); a chain ether such as dimethoxyethane (DME), and diethoxyethane (DEE); or $\gamma$-butyrolactone (GBL), acetonitrile (AN), and sulfolane (SL). These organic solvents can be used alone or used in the form of a solvent mixture.

Among the above examples, as a preferable organic solvent, a solvent mixture in which at least two or more selected from among the group consisting of propylene carbonate (PC), ethylene carbonate (EC), and diethyl carbonate (DEC) are mixed or a solvent mixture containing $\gamma$-butyrolactone (GBL) may be used. When such a solvent mixture is used, it is possible to obtain a nonaqueous electrolyte battery having excellent high temperature characteristics.

Examples of the polymer material included in the gel-like nonaqueous electrolyte include materials containing polyvinylidene fluoride (PVdF), polyacrylonitrile (PAN), or polyethylene oxide (PEO).

In addition, as the nonaqueous electrolyte, a room temperature molten salt (ionic melt) containing lithium ions can be used. For example, when an ionic melt which includes lithium ions, organic matter cations and anions and is liquid at 100 °C or less, and preferably at room temperature or less is selected, it is possible to obtain a nonaqueous electrolyte battery having a wide operating temperature.

(5) Separator

As the separator 4, a porous film including, for example, polyethylene, polypropylene, cellulose, or polyvinylidene fluoride (PVdF), or a synthetic resin nonwoven fabric can be used. Example of a porous film that is suitably used as the separator 4 include a film made of a polyolefin resin including either or both of polyethylene and polypropylene. The separator 4 made of such a material is preferable because it melts when the temperature of the battery increases to a certain temperature, a shutdown function of significantly attenuating a charge and discharge current by blocking pores is easily added, and safety of the nonaqueous electrolyte battery can be improved.

In addition, in consideration of cost reduction, the separator 4 made of a cellulose material may be used.

According to the present embodiment described above, it is possible to provide a nonaqueous electrolyte battery in which an increase in internal resistance is prevented and the charging and discharging cycle life is improved.

(Fourth embodiment)

Next, a battery pack according to a fourth embodiment will be described in detail.

The battery pack according to the present embodiment includes at least one of the nonaqueous electrolyte battery (that is, a single cell) according to the third embodiment. When the battery pack includes a plurality of single cells, the single cells are arranged to be electrically connected in series, in parallel, or in parallel series.

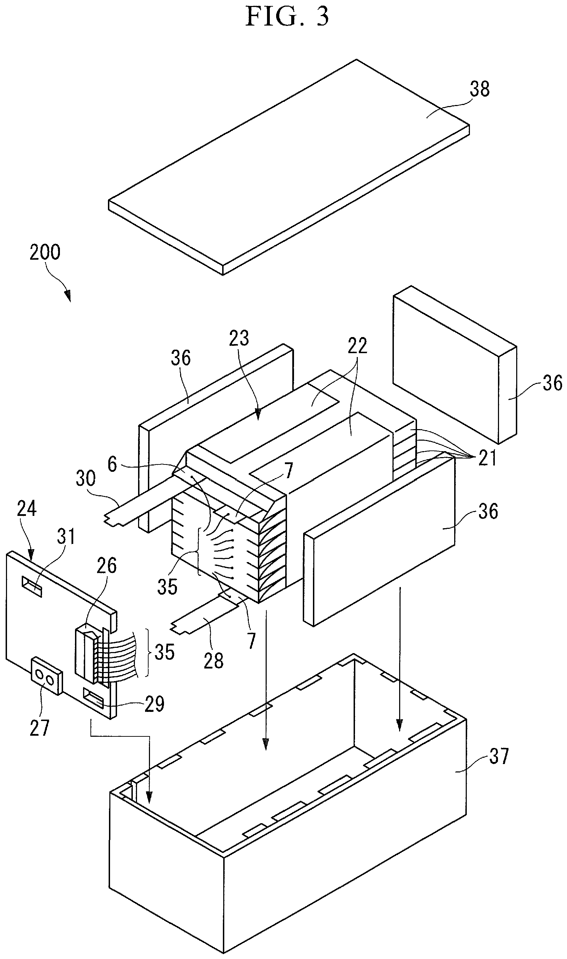

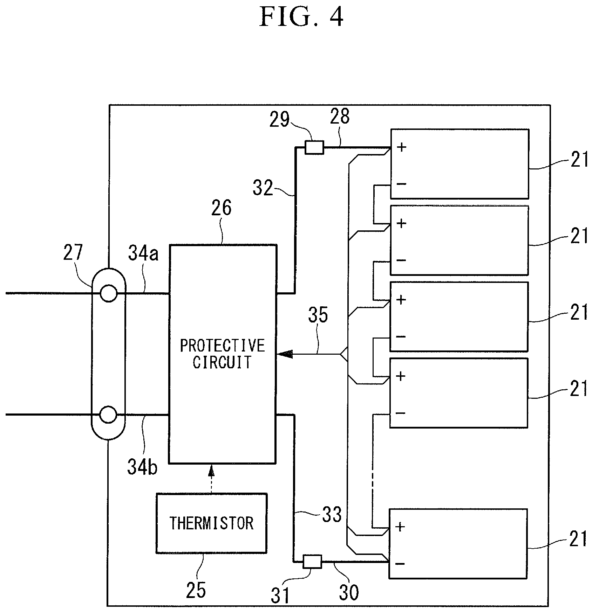

A battery pack 200 according to the present embodiment will be described in detail with reference to Fig. 3 and Fig. 4. In the battery pack 200 shown in Fig. 3, the flat nonaqueous electrolyte solution battery 100 shown in Fig. 1 is used as a single cell 21.

The plurality of single cells 21 are laminated so that the negative electrode terminal 6 and the positive electrode terminal 7 extended to the outside are aligned in the same direction, and are fastened using an adhesive tape 22 to form an assembled battery 23. As shown in Fig. 3 and Fig. 4, these single cells 21 are electrically connected to each other in series.

A printed wiring board 24 is arranged to face a side surface of the single cell 21 from which the negative electrode terminal 6 and the positive electrode terminal 7 extend. As shown in Fig. 3, a thermistor 25 (refer to Fig. 4), a protective circuit 26, and an energizing terminal 27 for an external device are mounted on the printed wiring board 24. Here, on a surface of the protective circuit board 24 that faces the assembled battery 23, an insulating plate (not shown) is attached in order to avoid an unnecessary connection with a wiring of the assembled battery 23.

A positive electrode-side lead 28 is connected to the positive electrode terminal 7 positioned on the lowermost layer of the assembled battery 23, and a tip thereof is inserted into a positive electrode-side connector 29 of the printed wiring board 24 and electrically connected thereto. A negative electrode-side lead 30 is connected to the negative electrode terminal 6 positioned on the uppermost layer of the assembled battery 23, and a tip thereof is inserted into a negative electrode-side connector 31 of the printed wiring board 24 and electrically connected thereto. The connectors 29 and 31 are connected to the protective circuit 26 through wirings 32 and 33 (refer to Fig. 4) formed on the printed wiring board 24.

The thermistor 25 is used to detect the temperature of the single cell 21. Although not shown in Fig. 3, the thermistor 25 is provided in the vicinity of the single cell 21 and transmits a detected signal to the protective circuit 26. The protective circuit 26 can block a positive side wiring 34a and a negative side wiring 34b between the protective circuit 26 and the energizing terminal 27 for an external device under predetermined conditions. Here, the above predetermined conditions include that, for example, a temperature detected by the thermistor 25 be a predetermined temperature or higher. Furthermore, the predetermined conditions include that an overcharge, an overdischarge, an overcurrent, or the like of the single cell 21 be detected. The detection of such an overcharge is performed for each of the single cells 21 individually or all of the single cells 21. Here, when detection of an overcharge or the like is performed for each of the single cells 21, a battery voltage may be detected, or a positive electrode potential or a negative electrode potential may be detected. In the case of the latter, a lithium electrode used as a reference electrode is inserted into each of the single cells 21. In Fig. 3 and Fig. 4, a wiring 35 for voltage detection is connected to each of the single cells 21, and a detected signal is transmitted to the protective circuit 26 through the wiring 35.

Since the nonaqueous electrolyte battery included in the battery pack of the present embodiment is excellent in controlling the potential of the positive electrode or the negative electrode according to detection of a battery voltage, a protective circuit configured to detect a battery voltage is suitably used.

As shown in Fig. 3, on three side surfaces of the assembled battery 23 except the side surface from which the positive electrode terminal 7 and the negative electrode terminal 6 protrude, protective sheets 36 made of rubber or a resin are arranged.

The assembled battery 23 is accommodated in a storage container 37 together with the protective sheets 36 and the printed wiring board 24. That is, the protective sheets 36 are arranged on both inner sides of the storage container 37 in the long side direction and an inner side in the short side direction. The printed wiring board 24 is arranged on an inner side surface opposite to the protective sheet 36 in the short side direction. The assembled battery 23 is positioned in a space surrounded by the protective sheet 36 and the printed wiring board 24. A cover 38 is attached to the upper surface of the storage container 37.

Here, in place of the adhesive tape 22, a heat shrinkable tape may be used to fix the assembled battery 23. In this case, protective sheets are arranged on both side surfaces of the assembled battery, a heat shrinkable tape is wound therearound, and the heat shrinkable tape is then thermally shrunk to bind the assembled battery.

Here, while the single cells 21 are connected in series in Fig. 3 and Fig. 4, the single cells 21 may be connected in parallel or in a combination of series connection and parallel connection in order to increase a battery capacity. In addition, the assembled battery packs may be additionally connected in series or in parallel.

According to the present embodiment described above, the nonaqueous electrolyte battery having excellent charging and discharging cycle performance in the third embodiment is provided. Therefore, it is possible to provide a battery pack having improved charging and discharging cycle characteristics.

Here, the mode of the battery pack is appropriately changed depending on applications. A battery pack exhibiting excellent cycle characteristics when a high current is output is preferable for applications of the battery pack according to the present embodiment. Specifically, a power supply of a digital camera, and automotive applications for two-wheel to four-wheel hybrid electric vehicles, two-wheel to four-wheel electric vehicles, and assisted bicycles are exemplary examples. In particular, a battery pack using a nonaqueous electrolyte battery having excellent low temperature and high temperature characteristics is suitably used for automotive applications.

According to at least one of the embodiments described above, when the negative electrode active material in which at least a titanic oxide compound is included and the intensity ratio of an infrared absorption spectrum after pyridine adsorption and desorption on a surface of the negative electrode active material satisfies relationships represented by the following formula [{$I(3663 \text{ cm}^{-1})/I(3738 \text{ cm}^{-1})$}>0.7] and the following formula [{$I(2981 \text{ cm}^{-1})/I(2930 \text{ cm}^{-1})$}<1] is included, it is possible to improve charging and discharging cycle characteristics of the nonaqueous electrolyte battery and the battery pack using the same.

[Examples]

Next, the present invention will be described in further detail with reference to examples and comparative examples. The scope of the present invention is not limited to the examples, and modifications can be appropriately made without departing from the spirit and scope of the present invention.

(Example 1)

<Synthesis titanic oxide compound having $TiO_2(B)$ crystal structure>

In the present example, potassium carbonate ($K_2CO_3$) and anatase type titanium oxide ($TiO_2$) were used as starting materials.

First, the above starting materials were mixed and calcined at 1000 °C for 24 hours to synthesize a potassium titanate compound ($K_2Ti_4O_9$).

Next, the potassium titanate compound was dried and pulverized using zirconia beads to adjust the particle size, and was then washed with distilled water to obtain a proton exchange precursor.

Next, the proton exchange precursor was put into a hydrochloric acid solution (1 M concentration) and was subjected to an acid treatment with ultrasonic stirring at 25 °C for 1 hour. The operation of the acid treatment was performed 12 times with the hydrochloric acid solution being replaced therebetween. The acid-treated compound was washed with distilled water to obtain a protonated titanic oxide compound.

Then, the above protonated titanic oxide compound was calcined in air at 350 °C for 3 hours to obtain a titanic oxide compound having a $TiO_2(B)$ crystal structure.

<Production of negative electrode active material>

1 g of methyl polysilicate ($Si_nO_{(n-1)}(OCH_3)_{2(n+1)}$: here, n=3 to 5 (average), 50 to 53% as silica), and 2 g of ethanol were added to 15 g of the titanic oxide compound synthesized in the above procedure. A drying treatment was performed in a room temperature environment (25 °C, dew point -40 °C, nitrogen gas flow). It was confirmed that the mass of the dried powder increased by 5% with respect to the mass thereof before addition. Then, the surface of the powder was observed through TEM, and it was confirmed that a Si oxide coating layer was formed on the surface of the titanic oxide compound.

The titanic oxide compound including the coating layer was used as the negative electrode active material in the present example.

<Production of negative electrode>

NMP was added, and 90 mass% of the powder of the negative electrode active material obtained in the above procedure, 5 mass% of acetylene black, and 5 mass% of polyvinylidene fluoride (PVdF) were mixed to prepare a slurry. The slurry was applied to both surfaces of a negative electrode current collector made of an aluminum foil with a thickness of 15 μm, and dried, and pressing was then performed to produce a negative electrode having an electrode density of 2.0 g/cm$^3$.

<Production of positive electrode>

In the present example, as a positive electrode active material, lithium nickel composite oxide (LiNi$_{0.82}$Co$_{0.15}$Al$_{0.03}$O$_2$) was used. As a conductive agent, acetylene black and polyvinylidene fluoride (PVdF) were used.

First, NMP was added, and 90 mass% of the powder of the lithium nickel composite oxide, 5 mass% of acetylene black, and 5 mass% of polyvinylidene fluoride (PVdF) were mixed to prepare a slurry.

Then, the slurry was applied to both surfaces of a positive electrode current collector made of an aluminum foil with a thickness of 15 μm, and dried, and pressing was then performed to produce a positive electrode having an electrode density of 3.15 g/cm$^3$.

<Production of winding electrode group>

A positive electrode, a separator made of a polyethylene porous film with a thickness of 25 μm, a negative electrode, and a separator were laminated in that order. Then, the laminate was wound in a spiral shape. The laminate was thermally pressed at 90 °C to produce a flat winding electrode group with a width of 30 mm and a thickness of 3.0 mm.

Then, the obtained winding electrode group was accommodated in a pack formed of a laminate film and dried at 80 °C for 24 hours in vacuum. The laminate film was obtained by forming a polypropylene layer on both surfaces of an aluminum foil with a thickness of 40 μm, and the total thickness was 0.1 mm.

<Preparation of liquid nonaqueous electrolyte>

First, ethylene carbonate (EC) and ethyl methyl carbonate (EMC) were mixed at a volume ratio of 1:2 to prepare a solvent mixture. In the solvent mixture, LiPF$_6$ (1 M) was dissolved as an electrolyte to prepare a liquid nonaqueous electrolyte.

<Production of nonaqueous electrolyte secondary battery (nonaqueous electrolyte battery)>

First, the liquid nonaqueous electrolyte was injected into the laminate film pack in which the winding electrode group was accommodated. Then, the pack was completely sealed through thermal sealing. Thereby, a nonaqueous electrolyte secondary battery (nonaqueous electrolyte battery) having the structure shown in Fig. 1 and a width of 35 mm, a thickness of 3.2 mm, and a height of 65 mm was produced.

(Example 2)

In the present example, a nonaqueous electrolyte secondary battery was produced according to the same method as in Example 1 except that a Si oxide coating layer was formed on the surface of an Nb-containing titanic oxide compound having a TiO$_2$(B) crystal structure to be described below as a negative electrode active material used for a negative electrode.

<Synthesis of Nb-containing titanic oxide compound having TiO$_2$(B) crystal structure>

In the present example, potassium carbonate (K$_2$CO$_3$), anatase type titanium oxide (TiO2), and niobium hydroxide (Nb$_2$O$_5$/nH$_2$O) were used as starting materials.

First, the above starting materials were mixed and calcined at 1000 °C for 24 hours to synthesize an Nb-containing alkali titanate compound (K-Ti-Nb-O compound).

Next, the K-Ti-Nb-O compound was dried and pulverized using zirconia beads to adjust the particle size, and was then washed with distilled water to obtain a proton exchange precursor.

Next, the proton exchange precursor was put into a hydrochloric solution (1 M concentration) and was subjected to an acid treatment with ultrasonic stirring at 25 °C for 1 hour. The operation of the acid treatment was performed 12 times with the hydrochloric acid solution being replaced therebetween. The acid-treated compound was washed with distilled water to obtain an Nb-containing protonated titanic oxide compound.

Then, the above Nb-containing protonated titanic oxide compound was calcined in air at 350 °C for 3 hours to obtain an Nb-containing titanic oxide compound having a TiO$_2$(B) crystal structure.

The obtained titanic oxide compound was analyzed through ICP emission spectroscopy (measurement device: SPS-4000 commercially available from SII Nanotechnology). The result was that the amount of Nb was found to be 8 mass% with respect to the total mass of the Nb-containing titanic oxide compound.

<Production of negative electrode active material>

As in Example 1,0.6 g of methyl polysilicate and 2 g of ethanol were added to 15 g of the Nb-containing titanic oxide compound having a TiO$_2$(B) crystal structure synthesized in the above procedure. A drying treatment was performed in a room temperature environment (25 °C, dew point -40 °C, nitrogen gas flow). It was confirmed that the mass of the dried powder increased by 9% with respect to the mass thereof before addition. Then, the surface of the powder was observed through TEM-EDX, and it was confirmed that a Si oxide coating layer was formed on the surface of the Nb-containing titanic oxide compound having a $TiO_2(B)$ crystal structure.

The titanic oxide compound including the coating layer was used as the negative electrode active material in the present example.

<Production of nonaqueous electrolyte secondary battery>

A negative electrode was produced using the above negative electrode active material according to the same method as in Example 1. Furthermore, a positive electrode, a winding electrode group, and a liquid nonaqueous electrolyte were prepared according to the same method as in Example 1 to produce a nonaqueous electrolyte secondary battery of Example 2.

(Example 3)

In the present example, 2.5 g of polymethyl silicate and 2 g of ethanol were added to 15 g of the Nb-containing titanic oxide compound having a $TiO_2(B)$ crystal structure synthesized in Example 2. A drying treatment was performed in a room temperature environment (25 °C, dew point -40 °C, nitrogen gas flow). It was confirmed that the mass of the dried powder increased by 9% with respect to the mass of the titanic oxide compound to which the compounds were not added. Then, the surface of the powder was observed through TEM-EDX, and it was confirmed that a coating layer including an oxide containing Si as a main component was present on the surface of the Nb-containing titanic oxide compound having a $TiO_2(B)$ crystal structure.

The titanic oxide compound including the coating layer was used as the negative electrode active material in the present example.

Then, a negative electrode was produced using the above negative electrode active material according to the same method as in Example 1. Furthermore, a positive electrode, a winding electrode group, and a liquid nonaqueous electrolyte were prepared according to the same method as in Example 1 to produce a nonaqueous electrolyte secondary battery of Example 3.

(Example 4)

In the present example, 15 g of the Nb-containing titanic oxide compound having a $TiO_2(B)$ crystal structure synthesized in Example 2 was mixed with 1.4 g of sodium metasilicate pentahydrate ($Na_2O.SiO_2/5H_2O$) and 200 g of pure water. Then, neutralization titration was performed using a sulfuric oxide aqueous solution (0.5 M) until the pH reached 6 to 7. Then, a washing treatment with water was performed until no sulfate ions were detected. Next, only a powder portion was recovered from the mixture washed with water and dried using a dryer at 120 °C. In this case, it was confirmed that the mass of the dried powder had increased with respect to the Nb-containing titanic oxide compound to which various compounds were not added. Then, the surface of the powder was observed through TEM-EDX, and it was confirmed that a coating layer including an oxide containing Si as a main component was present on the surface of the Nb-containing titanic oxide compound having a $TiO_2(B)$ crystal structure.

The titanic oxide compound including the coating layer was used as the negative electrode active material in the present example.

Then, a negative electrode was produced using the above negative electrode active material according to the same method as in Example 1. Furthermore, a positive electrode, a winding electrode group, and a liquid nonaqueous electrolyte were prepared according to the same method as in Example 1 to produce a nonaqueous electrolyte secondary battery of Example 4.

(Example 5)

In the present example, a negative electrode active material was prepared according to the same method as in Example 4 except that 1 g of sodium metasilicate pentahydrate ($Na_2OSiO_2/5H_2O$) was added to 15 g of the Nb-containing titanic oxide compound having a $TiO_2(B)$ crystal structure synthesized in Example 2.

Then, a negative electrode was produced using the above negative electrode active material according to the same method as in Example 1. Furthermore, a positive electrode, a winding electrode group, and a liquid nonaqueous electrolyte were prepared according to the same method as in Example 1 to produce a nonaqueous electrolyte secondary battery of Example 5.

(Example 6)

In the present example, a negative electrode active material was prepared according to the same method as in Example 4 except that 2 g of sodium metasilicate pentahydrate ($Na_2OSiO_2/5H_2O$) was added to 15 g of the Nb-containing titanic oxide compound having a $TiO_2$(B) crystal structure synthesized in Example 2.

Then, a negative electrode was produced using the above negative electrode active material according to the same method as in Example 1. Furthermore, a positive electrode, a winding electrode group, and a liquid nonaqueous electrolyte were prepared according to the same method as in Example 1 to produce a nonaqueous electrolyte secondary battery of Example 6.

(Comparative Example 1)

In Comparative Example 1, a negative electrode was produced according to the same method as in Example 1 except that the Nb-containing titanic oxide compound having a $TiO_2$(B) crystal structure synthesized in Example 2 was used as a negative electrode active material without change. Furthermore, a positive electrode, a winding electrode group, and a liquid nonaqueous electrolyte were prepared according to the same method as in Example 1 to produce a nonaqueous electrolyte secondary battery.

(Comparative Example 2)

In Comparative Example 2, 15 g of the Nb-containing titanic oxide compound having a $TiO_2$(B) crystal structure synthesized in Example 2 was mixed with 0.8 g of polymethylsilane and 2 g of ethanol. Then, a drying treatment was performed in an air environment (25 °C, humidity 50%). In this case, it was confirmed that the mass of the dried powder increased by 2.5% with respect to the Nb-containing titanic oxide compound to which various compounds were not added. Then, according to the same method as in Example 2, a Si oxide coating layer was formed on the surface of the Nb-containing titanic oxide compound having a $TiO_2$(B) crystal structure to produce a negative electrode active material. Furthermore, a positive electrode, a winding electrode group, and a liquid nonaqueous electrolyte were prepared according to the same method as in Example 2 to produce a nonaqueous electrolyte secondary battery.

(Comparative Example 3)

In Comparative Example 3, 15 g of the Nb-containing titanic oxide compound having a $TiO_2$(B) crystal structure synthesized in Example 2 was mixed with 0.6 g of polymethylsilane and 2 g of ethanol. Then, a drying treatment was performed in an air environment (25 °C, humidity 40%). In this case, it was confirmed that the mass of the dried powder increased by 2.0% with respect to the Nb-containing titanic oxide compound to which various compounds were not added. Then, according to the same method as in Example 2, a Si oxide coating layer was formed on the surface of the Nb-containing titanic oxide compound having a $TiO_2$(B) crystal structure to produce a negative electrode active material. Furthermore, a positive electrode, a winding electrode group, and a liquid nonaqueous electrolyte were prepared according to the same method as in Example 2 to produce a nonaqueous electrolyte secondary battery.

(Comparative Example 4)

In Comparative Example 4, 15 g of the Nb-containing titanic oxide compound having a $TiO_2$(B) crystal structure synthesized in Example 2 was mixed with 3 g of polymethylsilane and 2 g of ethanol. Then, a drying treatment was performed in an air environment (25 °C, humidity 70%). In this case, it was confirmed that the mass of the dried powder increased by 7.7% with respect to the Nb-containing titanic oxide compound to which various compounds were not added. Then, according to the same method as in Example 2, a Si oxide coating layer was formed on the surface of the Nb-containing titanic oxide compound having a $TiO_2$(B) crystal structure to produce a negative electrode active material. Furthermore, a positive electrode, a winding electrode group, and a liquid nonaqueous electrolyte were prepared according to the same method as in Example 2 to produce a nonaqueous electrolyte secondary battery.

(Comparative Example 5)

In Comparative Example 5, 15 g of the Nb-containing titanic oxide compound having a $TiO_2$(B) crystal structure synthesized in Example 2 was mixed with 0.7 g of polymethylsilane and 2 g of ethanol. Then, a drying treatment was performed in an air environment (25 °C, humidity 30%). In this case, it was confirmed that the mass of the dried powder increased by 2.2% with respect to the Nb-containing titanic oxide compound to which various compounds were not added. Then, according to the same method as in Example 2, a Si oxide coating layer was formed on the surface of the Nb-containing titanic oxide compound having a $TiO_2$(B) crystal structure to produce a negative electrode active material. Furthermore, a positive electrode, a winding electrode group, and a liquid nonaqueous electrolyte were prepared according to the same method as in Example 2 to produce a nonaqueous electrolyte secondary battery.

(Evaluation tests)

<Measurement of amount of Si in negative electrode active material>

The amounts of Si (in terms of $SiO_2$) in the negative electrode active materials of Examples 1 to 6 and Comparative Examples 1 to 5 were measured through ICP emission spectroscopy. In this case, as a measurement device, an SPS-4000 commercially available from SII Nanotechnology was used.

<Infrared absorption spectrum test of negative electrode active material>

For the negative electrode active materials of Examples 1 to 6 and Comparative Examples 1 to 5, infrared absorption spectrums of the negative electrode active materials were measured through infrared diffuse reflection spectroscopy using a Fourier transform infrared spectrophotometer.
Specifically, according to the following measurement device and measurement conditions, the negative electrode active material was fixed to a measurement tool, and the intensity of an infrared absorption spectrum was examined.

    (a) Fourier transform FTIR device: FTS-60A (commercially available from BioRad Digilab)
    (b) Light source: special ceramic type
    (c) Detector: DTGS
    (d) Spectral resolution: 4 $cm^{-1}$
    (e) Total number of scans: 256
    (f) Accessory device: diffuse reflection measurement device (commercially available from PIKE Technologies), window plate $CaF_2$
    (g) Reference: gold

For measurement, first, the negative electrode active material was put into a sample cup, and placed in a cell included in the above Fourier transform FTIR device.
Next, while nitrogen gas flowed into the cell at 50 mL/min, the negative electrode active material was heated to 500 °C and left for 1 hour. Then, the temperature of the negative electrode active material was lowered to room temperature (25 °C), and raised to 1000 °C again.
Next, the inside of the cell was depressurized. Pyridine vapor was introduced into the cell for 30 minutes, and thus pyridine was adsorbed onto the surface of the negative electrode active material.
Next, while nitrogen gas flowed into the cell at 100 mL/min, the negative electrode active material was left at 100 °C for I hour, and then heated to 150 °C and left for 1 hour. Thereby, the pyridine adsorbed onto the surface of the negative electrode active material was removed.
After the negative electrode active material was treated as described above, infrared diffuse reflection was measured according to the operation of the Fourier transform FTIR device. Here, in the obtained infrared absorption spectrum, the background was excluded and a peak area was obtained.

(Charging and discharging cycle test)

A beaker cell (three-pole cell) in which the electrodes produced in Examples 1 to 6 and Comparative Examples 1 to 5 were used as a working electrode, and lithium metal was used as a counter electrode and a reference electrode was produced. In this case, a glass filter was used as a separator. In addition, as a liquid nonaqueous electrolyte, a mixed solution in which $LiPF_6$ was used as a supporting salt, and ethylene carbonate (EC) and diethyl carbonate (DEC) were mixed at a ratio of 1:2 was used.
Then, a test was performed on the beaker cells using the electrodes of the above examples and comparative examples under an environment of 45 °C and at a rate of 1C. In this case, charging was performed at a constant current and constant voltage of 1.4 V for 3 hours, and then constant current discharging was performed at a discharge cut-off voltage of 3.0 V. This charging and discharging were set as one cycle. A charging and discharging cycle test was performed over a total of 50 cycles. Then, the capacity retention rate (%) was calculated from the capacity after the test of 50 cycles with respect to the initial capacity.
Table 1 shows a list of negative electrode production conditions in Examples 1 to 6 and Comparative Examples 1 to 5, the intensity ratio of infrared absorption spectrums in the examples and comparative examples, and the capacity retention rate (%) after the charging and discharging cycle test was performed over 50 cycles using the beaker cell.

[Table 1]

| | Coating layer formation conditions | | | | | Coating layer characteristics | | | Intensity ratio of infrared absorption spectrum | | Capacity retention rate (after 50 cycles: %) |
|---|---|---|---|---|---|---|---|---|---|---|---|
| | Dew point (°C) or humidity (%) | Environment (atmosphere) | Titanic oxide compound (g) | Polymethyl silicate (g) | Sodium silicate (g) | Ethanol (g) | Content of Si (mass%: in terms of $SiO_2$ with respect to total mass of titanic oxide compound) | Content of C (mass%: with respect to total mass of titanic oxide compound) | C/Si (molar ratio) | $I(3663$ $cm^{-1})/I$ $(3738$ $cm^{-1})$ | $I(2981$ $cm^{-1})/I$ $(2930$ $cm^{-1})$ | |
| Example 1 | -40 °C | Nitrogen flow | 15 | 1 | - | 2 | 2.7 | 0.46 | 0.821429 | 0.8 | 0.6 | 94 |
| Example 2 | -20 °C | Nitrogen flow | 15 | 0.6 | - | 2 | 1.7 | 0.19 | 0.508929 | 0.7 | 0.5 | 91 |
| Example 3 | -40 °C | Nitrogen flow | 15 | 2.5 | - | 2 | 6.5 | 1.3 | 0.742857 | 1 | 0.55 | 96 |
| Example 4 | - | Sodium silicate | 15 | - | 1.4 | - | 2.5 | - | - | 0.66 | 1.3 | 91 |
| Example 5 | - | Sodium silicate | 15 | - | 1 | - | 1.6 | - | - | 0.52 | 1.1 | 90 |
| Example 6 | - | Sodium silicate | 15 | - | 2 | - | 3.5 | - | - | 0.69 | 1.15 | 92 |
| Comparative Example 1 | - | Uncoated | 0 | - | - | - | 0 | 0 | - | - | 0.6 | 50 |
| Comparative Example 2 | 50 °C | Dry in air environment | 15 | 0.8 | - | 2 | 2.3 | 0.02 | 0.037267 | 0.88 | 1.22 | 63 |
| Comparative Example 3 | 40 °C | Dry in air environment | 15 | 0.6 | - | 2 | 1.88 | 0.01 | 0.022796 | 0.77 | 1.1 | 55 |
| Comparative Example 4 | 70 °C | Dry in air environment | 15 | 3 | - | 2 | 7.5 | 0.03 | 0.017143 | 1.2 | 1.3 | 66 |
| Comparative Example 5 | 30 °C | Dry in air environment | 15 | 0.7 | - | 2 | 2.1 | 0.01 | 0.020408 | 0.78 | 1.15 | 60 |

EP 3 349 277 A1

24

(Evaluation results)

As shown in Table 1, in Examples 1 to 3 in which the negative electrode active material in which the titanic oxide compound and the Si-containing metal alkoxide were mixed and the coating layer including $SiO_2$ was formed on the surface of the titanic oxide compound according to a method using a sol gel reaction was produced and used for the negative electrode, it was confirmed that the intensity ratio of an infrared absorption spectrum represented by the following formula $\{I(3663\ cm^{-1})/I(3738\ cm^{-1})\}$ was 0.7 to 1, and the intensity ratio represented by the following formula $\{I(2981\ cm^{-1})/I(2930\ cm^{-1})\}$ was 0.5 to 0.6. Then, it could be clearly seen that, in the beaker cell produced using the negative electrode including the negative electrode active material described above, the capacity retention rate after the charging and discharging cycle test was performed over 50 cycles was extremely excellent at 91 to 96%.

Here, in Examples 1 to 3, the amount of Si (in terms of $SiO_2$) in the coating layer formed on the surface of the titanic oxide compound was in the range of 1.7 to 6.5 mass% with respect to the total mass of the titanic oxide compound.

Furthermore, as shown in Table 1, in Examples 4 to 6 in which, according to the method in which the titanic oxide compound and the sodium silicate were mixed and the mixture was neutralized and dried, and the negative electrode active material in which the coating layer including $SiO_2$ was formed on the surface of the titanic oxide compound was produced and used for the negative electrode, it was confirmed that the intensity ratio of an infrared absorption spectrum represented by the following formula $\{I(3663\ cm^{-1})/I(3738\ cm^{-1})\}$ was 0.52 to 0.69 and the intensity ratio represented by the following formula $\{I(2981\ cm^{-1})/I(2930\ cm^{-1})\}$ was 1.1 to 1.3. Thus, it could be clearly seen that, in the beaker cell produced using the negative electrode including the negative electrode active material described above, the capacity retention rate after the charging and discharging cycle test was performed over 50 cycles was extremely excellent at 90 to 92%.

Here, in Examples 4 to 6, the amount of Si (in terms of $SiO_2$) in the coating layer formed on the surface of the titanic oxide compound was in the range of 1.6 to 3.5 mass% with respect to the total mass of the titanic oxide compound.

In addition, as shown in the columns of the coating layer characteristics, the amount of C (mass%), and the molar ratio of C/Si in Table 1, it was confirmed that, in the coating layer, C derived from a polymethyl silicate-containing component used when the coating layer was formed was included. In Examples 1 to 3 in which C was included in the coating layer, the capacity retention rate after the charging and discharging cycle test was performed over 50 cycles was high. In Examples 1 and 3 in which a particularly large amount of C was included, the capacity retention rate was extremely excellent at 94 to 96%. This is thought to have been caused by the fact that, when a moderate amount of C was included in the coating layer, chemical stability of the coating layer including Si was improved. In general, in the cell, since a very small amount of HF was generated due to decomposition of the supporting salt or the like, Si was easily eluted in that environment. However, when the coating layer included C, elution of Si from the coating layer was thought to be prevented to a certain extent.

On the other hand, in Comparative Example 1 in which no coating layer including a Si-containing metal oxide was formed on the surface of the titanic oxide compound, since there was no $SiO_2$ coating specific peak in the region of 3738 $cm^{-1}$, it was not possible to calculate the intensity ratio of an infrared absorption spectrum represented by the following formula $\{I(3663\ cm^{-1})/I(3738\ cm^{-1})\}$. Therefore, it could be clearly seen that, in the beaker cell produced using the negative electrode including the negative electrode active material of Comparative Example 1, the capacity retention rate after the charging and discharging cycle test was performed over 50 cycles was 50%, which was significantly inferior to those of the examples.

In addition, in Comparative Examples 2 to 5, the negative electrode active material in which the coating layer including $SiO_2$ was formed on the surface of the titanic oxide compound according to a sol-gel method was used for the negative electrode. However, in Comparative Examples 2 to 5, it was confirmed that the intensity ratio of an infrared absorption spectrum represented by the following formula $\{I(3663\ cm^{-1})/I(3738\ cm^{-1})\}$ was 0.77 to 1.2, but the intensity ratio represented by the following formula $\{I(2981\ cm^{-1})/I(2930\ cm^{-1})\}$ was 1.1 to 1.3, which was outside the specified range of the present embodiment. Thus, it could be clearly seen that, in the beaker cell produced using the negative electrode including the negative electrode active material described above, the capacity retention rate after the charging and discharging cycle test was performed over 50 cycles was 55 to 66%, which was inferior to those of the examples.

Here, in Comparative Examples 2 to 5, the amount of Si (in terms of $SiO_2$) in the coating layer formed on the surface of the titanic oxide compound was in the range of 1.88 to 7.5 mass% with respect to the total mass of the titanic oxide compound.

Here, while the titanic oxide compound having a $TiO_2(B)$ crystal structure has been used as the titanic oxide compound in the above examples, the present invention is not limited thereto. A titanic oxide compound having a solid oxide site or a hydroxyl group on its surface and a titanium oxide composite oxide can be used for the negative electrode active material.

While several embodiments of the present invention have been described, these embodiments are only examples and are not intended to limit the scope of the invention. These embodiments can be implemented in various other forms, and various omissions, substitutions, and changes can be made without departing from the spirit and scope of the invention. These embodiments and modifications thereof are included in the spirit and scope of the invention, and fall within the inventions described in the appended claims and equivalents thereof.

[Reference Signs List]

1 Winding electrode group
2 Exterior member
3 Negative electrode
4 Separator
5 Positive electrode
6 Negative electrode terminal
7 Positive electrode terminal
11 Laminated electrode group
12 Exterior component
13 Positive electrode
14 Negative electrode
15 Separator
16 Negative electrode terminal
17 Positive electrode terminal
21 Single cell
22 Adhesive tape
23 Assembled battery
24 Printed wiring board
25 Thermistor
26 Protective circuit
27 Energizing terminal
28 Positive electrode-side lead
29 Positive electrode-side connector
30 Negative electrode-side lead
31 Negative electrode-side connector
32 Wiring
33 Wiring
34a Positive side wiring
34b Negative side wiring
35 Wiring
36 Protective sheet
37 Storage container
38 Cover
100 Nonaqueous electrolyte battery (nonaqueous electrolyte secondary battery)
101 Metal ion
102 Oxide ion
103 Skeletal structure portion
104 Void portion
105 Region
106 Region
107 Void portion
200 Battery pack.

**Claims**

1.  A negative electrode active material comprising:

     at least a titanic oxide compound,
     wherein the intensity ratio of an infrared absorption spectrum after pyridine adsorption and desorption on a surface of the negative electrode active material satisfies relationships represented by the following Formula (1) and Formula (2),

$$\{I(3663 \text{ cm}^{-1})/I(3738 \text{ cm}^{-1})\} > 0.7 \ ...(1)$$

$$\{I(2981 \text{ cm}^{-1})/I(2930 \text{ cm}^{-1})\} < 1 \ \ ...(2)$$

where, in Formulae (1) and (2), $\{I(3663 \text{ cm}^{-1})\}$, $\{I(3738 \text{ cm}^{-1})\}$, $\{I(2981 \text{ cm}^{-1})\}$, and $\{I(2930 \text{ cm}^{-1})\}$ indicate integrated intensities in regions of infrared wavenumbers.

2.  A negative electrode active material comprising:

at least a titanic oxide compound,
wherein the intensity ratio of an infrared absorption spectrum after pyridine adsorption and desorption on a surface of the negative electrode active material satisfies relationships represented by the following Formula (3) and Formula (4),

$$\{I(3663 \text{ cm}^{-1})/I(3738 \text{ cm}^{-1})\} < 0.7 \ ...(3)$$

$$\{I(2981 \text{ cm}^{-1})/I(2930 \text{ cm}^{-1})\} > 1 \ ...(4)$$

where, in Formulae (1) and (2), $\{I(3663 \text{ cm}^{-1})\}$, $\{I(3738 \text{ cm}^{-1})\}$, $\{I(2981 \text{ cm}^{-1})\}$, and $\{I(2930 \text{ cm}^{-1})\}$ indicate integrated intensities in regions of infrared wavenumbers.

3.  The negative electrode active material according to claim 1 or 2, comprising a coating layer including a Si-containing metal oxide that is formed on at least a part of a surface of the titanic oxide compound.

4.  The negative electrode active material according to claim 3,
wherein the Si-containing metal oxide is $SiO_2$.

5.  The negative electrode active material according to claim 4,
wherein the mass of Si (in terms of $SiO_2$) in the coating layer has a proportion of 0.5 to 20 mass% with respect to the total mass of the titanic oxide compound.

6.  The negative electrode active material according to any one of claims 1 to 5,
wherein the titanic oxide compound has a monoclinic titanium dioxide crystal structure.

7.  A method of producing a negative electrode active material comprising:

a process in which titanic oxide compound powder and a Si-containing metal alkoxide are mixed to obtain a mixture; and
a process in which the mixture is dried to form a coating layer including a Si-containing metal oxide and a residual organic component on at least a part of surface of the titanic oxide compound powder.

8.  A method of producing a negative electrode active material comprising:

a process in which titanic oxide compound powder and a sodium silicate are mixed to obtain a mixture; and
a process in which the mixture is neutralized and dried to form a coating layer including a Si-containing metal oxide on at least a part of surface of the titanic oxide compound powder.

9.  A nonaqueous electrolyte battery comprising:

a negative electrode including the negative electrode active material according to any one of claims 1 to 6;
a positive electrode; and

a nonaqueous electrolyte.

**10.** A battery pack comprising at least one of the nonaqueous electrolyte battery according to claim 9.

# FIG. 1

# FIG. 2

# FIG. 3

# FIG. 4

## FIG. 5

## FIG. 6

**INTERNATIONAL SEARCH REPORT**

| International application No. |
|---|
| PCT/JP2015/075831 |

| A. CLASSIFICATION OF SUBJECT MATTER |
|---|
| *H01M4/48*(2010.01)i, *H01M4/36*(2006.01)i |

According to International Patent Classification (IPC) or to both national classification and IPC

| B. FIELDS SEARCHED |
|---|

Minimum documentation searched (classification system followed by classification symbols)
H01M4/48, H01M4/36

Documentation searched other than minimum documentation to the extent that such documents are included in the fields searched
Jitsuyo Shinan Koho      1922–1996   Jitsuyo Shinan Toroku Koho   1996–2015
Kokai Jitsuyo Shinan Koho  1971–2015   Toroku Jitsuyo Shinan Koho   1994–2015

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 2015-99746 A  (Toshiba Corp.),<br>28 May 2015 (28.05.2015),<br>claims; paragraphs [0066] to [0068]<br>& US 2015/140433 A1<br>claims; paragraphs [0100] to [0104] | 1,3-7,9,10<br>2,8 |
| X<br>A | WO 2010/013726 A1  (Ishihara Sangyo Kaisha,<br>Ltd.),<br>04 February 2010 (04.02.2010),<br>claims; paragraphs [0009] to [0015], [0023]<br>& JP 5419874 B2        & TW 1014021 A | 2-5,8-10<br>1,6,7 |
| A | JP 2009-135094 A  (Tohoku University),<br>18 June 2009 (18.06.2009),<br>(Family: none) | 1-10 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered  to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>08 December 2015 (08.12.15) | Date of mailing of the international search report<br>15 December 2015 (15.12.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/075831

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-157398 A  (JGC Catalysts and Chemicals Ltd.),<br>15 July 2010 (15.07.2010),<br>(Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008117625 A

- JP 2008091327 A

**Non-patent literature cited in the description**

- **T. OHZUKU ; T. KODAMA ; T. HIRAI.** *J. Power Sources,* 1985, vol. 14, 153

- **R. MARCHAND ; L. BROHAN ; M. TOURNOUX.** *Material Research Bulletin,* 1980, vol. 15, 1129